# EUROPÄISCHE PATENTSCHRIFT

(11) **EP 4 179 881 B1**
(45) Veröffentlichungstag und Bekanntmachung des Hinweises auf die Patenterteilung: **22.07.2026**
(21) Anmeldenummer: 22206651.6
(22) Anmeldetag: 10.11.2022
(51) Int. Cl.: A23P 30/20, A23L 29/256, A23J 3/22, A23J 3/26, A23L 33/10, A23L 33/115, A23L 33/16, A23L 33/185, A23L 33/21, A23L 33/24, A23P 20/20

(54) **FASERVERBUND AUS MEHRKOMPONENTEN-FILAMENTEN ZUR NACHBILDUNG VON FLEISCH**
FIBRE COMPOSITE MADE OF MULTI-COMPONENT FILAMENTS FOR REPRODUCTION OF MEAT
COMPOSITE FIBREUX À PLUSIEURS COMPOSANTS POUR LA REPRODUCTION DE VIANDE

(30) Priorität: 12.11.2021 EP 21207980; 22.06.2022 EP 22180349
(43) Veröffentlichungstag der Anmeldung: 17.05.2023
(73) Patentinhaber: Project Eaden GmbH, 10969 Berlin (DE)
(72) Erfinder: Schmelzeisen, David, 10967 Berlin (DE); Wilmking, Jan, 10967 Berlin (DE)
(74) Vertreter: Eisenführ Speiser

(56) Entgegenhaltungen:
- WO-A1-2020/152689
- WO-A1-2021/095034
- WO-A1-2021/191906
- GB-A- 699 692
- US-A- 2 682 466
- US-A- 3 840 679

## Beschreibung

Die Erfindung ist dem technischen Gebiet der Herstellung von Fleischersatzprodukten zuzuordnen und betrifft ein Verfahren zur Herstellung eines Fleischersatzproduktes sowie ein solches Fleischersatzprodukt.

In einem ersten Aspekt betrifft die Erfindung ein Verfahren zur Herstellung eines Fleischersatzproduktes nach Anspruch 1.

In einem weiteren Aspekt ist die Erfindung auf ein Fleischersatzprodukt nach Anspruch 12 gerichtet, das hergestellt und/oder herstellbar ist mit dem erfindungsgemäßen Verfahren.

### Hintergrund und Stand der Technik

Im Laufe der letzten Jahre treffen immer mehr Menschen die Entscheidung, in ihrer Ernährung auf tierische Produkte zu verzichten. Die Gründe hierfür können vielfältig sein. So kann dies beispielsweise gesundheitliche Ursachen haben, ethische Aspekte hinsichtlich des Umgangs mit Tieren und/oder auch den Umwelt- und Klimaschutz betreffen. In vielen Super- und Biomärkten wächst daher die Auswahl an Fleischalternativen. Da die Verbraucher hohe Ansprüche an Fleischersatzprodukte haben, bilden Verfahren zur Produktion von Fleischersatzprodukten, die Fleisch in Geschmack und Optik sehr ähneln sollen, ein großes Forschungsfeld mit hoher wirtschaftlicher Bedeutung.

Um geeignete Imitate von Fleisch herzustellen, ist es maßgeblich, zunächst relevante Aspekte hinsichtlich des Verzehrs von Fleisch als tierisches Produkt zu erfassen. Der Geschmack von Fleisch hängt von einer Vielzahl von Faktoren ab, beispielsweise dem Tier, der Zucht hinsichtlich Bewegung, Futter und Ort, dem Alter, dem Stück (z. B. Filet, Rib-Eye, etc.), dem Schnitt, der Reifung (dry aged, smoked, etc.) und/oder der Zubereitung (z. B. gebraten, gegrillt, bei Niedertemperatur gegart). Dabei wird normalerweise zartes Fleisch zähem Fleisch vorgezogen.

Zartes Fleisch ist auf eine gleichmäßige, feine Verteilung von Muskelfasern und eine hohe Restfeuchte zurückzuführen. Die gleichmäßige, feine Verteilung von Muskelfasern wird durch eine häufige Beanspruchung des Muskels gefördert. Eine hohe Restfeuchte wird durch die Zubereitung gewährleistet.

Des Weiteren findet an der Oberfläche von Fleisch beim Erhitzen die sogenannte Maillard-Reaktion statt. Diese bezeichnet eine komplexe Reaktion von Fetten, Proteinen und Polysacchariden bei Hitze, die zu einer Bräunung der Oberfläche und einem leicht süßlichen Geschmack führt. infolge steigender Temperatur im Inneren des Fleisches verändern sich die Farbe und Struktur. Die Farbänderung hängt weitestgehend mit dem im Fleischsaft enthaltenen Myoglobin zusammen. So können bekannte Garzustände wie blue, rare, medium rare, medium und/oder well done eingestellt werden. Dabei spielt der Temperaturgradient zwischen dem Kern und der Oberfläche eine wichtige Rolle. Beim Braten hat die Ausgangstemperatur und Dicke des Fleisches ebenfalls einen großen Einfluss auf das Garergebnis.

Eine hohe Bedeutung wird dem im Fleisch enthaltenen Fett zugewiesen. Fett ist ein wichtiger Geschmacksträger und gibt dem Fleisch zusätzliches Aroma. Besonders beliebt sind Rindfleischstücke mit einem zentralen Fettauge (bspw. Entrecöte) oder fein marmorierte Fleischstücke, wie die des Wagyu Rindes. Während des Garvorganges wird Fett freigesetzt und in das Fleisch gezogen. Eine sehr feine und gleichmäßige Verteilung von Fett führt neben dem Geschmack zu einem besonders angenehmen Kaugefühl. Reines Fett hingegen ist sehr weich im Vergleich zu Muskelfasern und wird von vielen Menschen eher als störend beim Kauen empfunden.

Die aufgeführten Erläuterungen zu tierischen Fleischprodukten zeigen, dass vielerlei Aspekte berücksichtigt werden müssen, um Fleischersatzprodukte herzustellen, die echtem Fleisch in Genuss und Optik sehr nahe kommen.

Im Stand der Technik gibt es eine Vielzahl von Ansätzen, um für den Verzehr geeignete Fleischersatzprodukte herzustellen. Bekannte Herstellungsmethoden nutzen dabei neben Extrusionsverfahren auch Spinnverfahren.

So offenbart GB 1,081,627 A ein Verfahren zur Herstellung von Fleischersatzprodukten, bei dem Hohlfasern durch ein Spinnverfahren bereitgestellt und mithilfe eines essbaren Binders miteinander verbunden werden. Die Hohlfasern können dabei auch mit einem essbaren Material gefüllt sein. Die Befüllung der Hohlfasern erfolgt hierbei in zwei Schritten, nämlich indem zunächst die Hohlfasern bereitgestellt und daraufhin die Befüllung durchgeführt wird. Auf eine genaue Anordnung und Ausrichtung der Fasern für das Fleischersatzprodukt wird nicht näher eingegangen.

In US 2682466 wird ebenfalls ein Verfahren zur Herstellung eines Fleischersatzproduktes offenbart, bei dem auch ein Spinnverfahren eingesetzt wird. Durch das Spinnverfahren werden Filamente bereitgestellt, die beispielsweise Sojabohnenproteine enthalten. Die Filamente werden zu Bündeln oder Gruppen zusammengefasst und durch ein Bad befördert, das Fett enthält, beispielsweise Rinder- oder Schweinefett. Eine Anordnung der Filamente hinsichtlich einer Positionierung von Filamentsorten geht aus dem Offenbarungsgehalt der US 2682466 nicht hervor. Da die Filamente durch tierisches Fett geführt werden, eignet sich das damit hergestellte Fleischersatzprodukt nicht für Vegetarier oder Veganer.

In US 4,235,935 werden ein Verfahren und eine Vorrichtung zur Herstellung eines kontinuierlichen Streifens aus imitiertem Speck durch Niedertemperatur-Extrusion offenbart.

Dabei werden drei unterschiedlich gefärbte Teige zur Bildung eines gemeinsamen Streifens mit drei oder mehr unterschiedlich farbigen Zonen bereitgestellt, die kontinuierlich und zufällig in der Breite variieren. Unterschiedliche Extrusionsgeschwindigkeiten zwischen den Teigen können genutzt werden, um Falten- und Kräuselbildungen zu vermeiden. Zwar werden gesponnene Fasern erwähnt, allerdings werden diese den Teigen hinzugegeben, die dann anschließend extrudiert werden. Das Spinnen der Fasern ist hingegen nicht Gegenstand dieses Patents.

In US 4,423,083 wird für die Produktion des Fleischersatzproduktes zunächst eine Mischung umfassend koagulierbare Proteine, Alginat und Wasser gebildet. Diese Mischung wird gefroren, um während des Gefrierens vertikal ausgerichtete Fasern zu erhalten. Die gefrorenen Stücke werden dann in Richtung einer Längsachse geschnitten und daraufhin wieder aufgetaut. Das darin enthaltene Alginat geliert durch die Zufuhr eines Geliermittels. Schließlich werden weiße, ausgerichtete Proteinfaserbündel hergestellt. Es wird hierbei kein Spinnverfahren beschrieben.

In der GB 699 692 A wird ebenfalls ein Verfahren zur Herstellung eines Fleischersatzproduktes offenbart. Dabei werden auch Filamente umfassend Proteine durch ein Spinnverfahren bereitgestellt. Fett wird auf die Filamente aufgebracht, indem die Filamente durch ein Bad geführt werden, welches geschmolzenes Fett bzw. Fett in flüssiger Phase enthält. Die Filamente werden gestreckt, sodass die darin befindlichen Moleküle eine Orientierung erhalten. Daraufhin wird der Feuchtigkeitsgehalt der Filamente verringert und anschließend werden die Filamente zusammengefügt, um wiederrum mit Fett behandelt zu werden. Bei der letzteren Fettbehandlung erfolgt auch die Kontaktierung mit einem Bindemittel. Zum Erhalt des Fleischgeschmacks wird ein Fleisch-Geschmacksstoff eingefügt.

In US 3840679 A wird ein anderer Ansatz verfolgt, um ein Fleischersatzprodukt herzustellen. Tatsächlich wird der Ansatz der Bereitstellung von Filamenten durch ein Spinnverfahren ausgeschlossen (siehe Sp. 3, Z. 53 ff.). Hierbei wird eine trockene Proteinmischung bereitgestellt, die einen gewissen Anteil an essbaren Proteinen beinhaltet. Anschließend wird ein Feuchtigkeitsanteil eingeführt und daraufhin ein Kreppen durchgeführt, um ein zu bearbeitendes Protein-Teigblatt zu bilden. Danach wird das gekreppte Teigblatt zu einer Masse aggregiert und stabilisiert. Nach einer Erwärmung der stabilisierten Masse wird eine kohärente Fasermasse gebildet, die in Textur und Essbarkeit echtem Fleisch ähneln soll.

Auch in der WO 2021/191906 A1 wird ein Verfahren zur Herstellung eines Fleischersatzproduktes offenbart. Dazu wird mindestens eine verpackte Proteineinheit bereitgestellt, die mindestens einen länglichen Proteinstreifen umfasst. Der mindestens eine texturierte Proteinstreifen wird durch oder innerhalb eines Halteelements gehalten. Daraufhin wird der mindestens eine texturierte Proteinstreifen aus dem Halteelement gelöst und auf einen Herstellungsbett überführt. Dabei werden eine oder mehrere Monoschichten aus texturierten Proteinstreifen gebildet. Das Fleischersatzprodukt wird insbesondere derart bereitgestellt, indem im Wesentlichen jede Monoschicht über der anderen aufgebracht wird. Das Ablegen der Monoschichten kann insbesondere mithilfe eines festgelegten Plans erfolgen. Die Proteinstreifen können mit einem funktionalisierten Material (auch als funktionalisieren bekannt) beschichtet werden, die die Proteinstreifen teilweise oder vollständig umhüllen. Das Behandeln, insbesondere Beschichten, mit einem funktionalisierten Material kann in verschiedenen Phasen des Herstellungsverfahrens erfolgen. So können die Proteinstreifen vor dem Verpacken behandelt werden.

Die derzeit bekannten Fleischersatzprodukte weisen jedoch einige Nachteile auf. Die meisten Fleischersatzprodukte haben Schwierigkeiten, beim Bratprozess die Feuchtigkeit in der Fleischersatzmasse zu halten. In tatsächlich tierischem Fleisch wird ein Großteil des Wassers im faserförmigen Bindegewebe gespeichert und ist gleichmäßig im Fleisch verteilt. Beim Aufschneiden eines frisch gebratenen Stück Fleisches tritt Fleischsaft aus. Hingegen tritt nach kurzer Ruhephase nach dem Braten (5 - 10 Minuten) kaum Fleischsaft aus. Das Wasserrückhaltevermögen ist damit zeit- und temperaturabhängig. Würde man hingegen ein derzeit bekanntes Fleischersatzprodukt braten und daraufhin schneiden, wird man beobachten, dass kaum oder kein Fleischsaft herausfließt oder nach einer Ruhephase wieder in der Fleischfaser gespeichert wird.

Darüber hinaus weisen die bekannten Fleischersatzprodukte Schwierigkeiten in der Platzierung von Fett auf. Oftmals werden tiefgefrorene Kakaobutter Stücke mit einigen Millimetern bis hin zu wenigen Zentimetern Durchmesser in die Proteinmasse eingearbeitet. Die Position der Fettstücke ist im Produktionsverfahren nicht genau zu steuern. Darüber hinaus ist das Schmelzverhalten der Kakaobutterstücke anders als tatsächliches tierisches Fett im Fleisch. Somit ist eine Nachahmung des Bratverhaltens und des Geschmackes nur annähernd möglich.

Ein wesentliches Problem heutiger Fleischersatzprodukte ist ihre Textur und das damit verbundene Bissverhalten und ihr Aussehen. Daher sind Fleischersatzprodukte vor allem auf "processed food", wie Hackfleisch, Hackbällchen und gepresste oder panierte Schnitzel begrenzt. Des Weiteren ist es schwierig, unterschiedliche Komponenten, die beispielsweise Fett und/oder Faszien nachahmen, in Fleischersatzprodukte zu integrieren, sie im Herstellverfahren auszubilden, und/oder gezielt zu platzieren.

Die Textur heute käuflich erwerblicher Fleischersatzprodukte reicht von Brei bis hin zu einer Masse aus klebrigen Faserbündeln. Prozesstechnisch werden hierzu verschiedene Pflanzenproteine wie Soja, Erbsen, Gluten in Extrudern verarbeitet. Dabei vernetzen die Proteine über Reibung und Temperatur. Je nach Basisprotein, Extrudereinstellung, Temperaturführung und Wasseranteil kann die Textur eingestellt werden. Das Ergebnis kann von Brei über Klumpen mit wenigen Millimetern Durchmesser bis hin zu Faserbündeln mit ca. 10 cm Faserlänge variieren. Die Einstellung erfolgt über Trial-and-Error Versuche. Eine genaue Erklärung der Vernetzung der Proteine im Extruder ist Gegenstand der Forschung.

Im Stand der Technik sind auch Ansätze bekannt, um Fleischersatzprodukte durch 3D-Druck-Verfahren, künstliche Zellwachstumsverfahren und/oder eine gezielte Fermentation in einem Bioreaktor herzustellen.

In 3D-Druck-Verfahren werden mehrere Monomaterialien wie Proteinmasse und Fett in einem Block miteinander kombiniert, um Fleischstrukturen nachzuahmen.

Beispielsweise wird in der WO 2020/152689A1 ein Ansatz zur Herstellung eines Fleischersatzproduktes mithilfe eines 3D-Druckers bzw. durch ein additives Fertigungsverfahren verfolgt. Dabei werden Schichten bereitgestellt, die eine oder mehrere Bestandteile umfassend Proteine und/oder Fette aufweisen. Der 3D-Druck erfolgt derart, dass eine oder mehrere Segmente bereitgestellt werden, die die auf Proteine basierten Komponenten des Fleischersatzproduktes aufweisen und sich in ihrer chemischen Zusammensetzung von auf Fett basierten Komponenten unterscheiden. Mithin wird eine inhomogene Verteilung von auf Protein und Fett basierten Komponenten innerhalb des Fleischersatzproduktes erzeugt.

Die WO 2021/095034 A1 stellt eine Weiterentwicklung der WO 2020/152689 A1 dar, insbesondere vor dem Hintergrund, dass hinsichtlich der Fettkomponenten (siehe S. 15, Z. 18) und der Muskelnachahmung (siehe S. 29, Z. 14) auf die WO 2020/152689 A1 verwiesen wird. In dem Verfahren, welches in der WO 2021/095034 A1 offenbart wird, wird zunächst in einen Druckkopf (im Kontext eines 3D-Druckers bzw. einer additiven Fertigung) ein proteinhaltiges Material eingeführt. Auf ein Druckbett werden anschließend eine oder mehrere gefaltete (d. h. mit Faltungen versehene) Proteinstränge abgelegt. Mehrere abgelegte Stränge werden derart angeordnet, dass Segmente zwischen den Faltungen der einzelnen oder Mehrzahl von Strängen entlang ihrer Längsachse im Wesentlichen parallel zueinander sind.

Bisher ist bei 3D-Druck-Verfahren die Produktionsgeschwindigkeit gegenüber Extrudaten sehr limitiert, was dazu führt, dass die Fasern nicht gut ausgebildet werden können und insbesondere keine geeignete Orientierung der Makromoleküle vorliegt. Dies wirkt sich insbesondere nachteilig auf die Bissfestigkeit aus. Weiterhin ist es prozesstechnisch schwierig, die Faserstruktur gewünscht herzustellen, beispielsweise eine Kollagenhülle von wenigen Mikrometern um einen Proteinkern zu legen.

Künstliche Zellwachstumsverfahren stellen eine vielversprechende Technologie dar, die nach Ansicht vieler Fachleute auf lange Zeit tierisches Fleisch sehr gut nachbilden können wird. Allerdings gibt es noch wesentliche Probleme, die gelöst werden müssen. So ist das Zellwachstumsmedium derzeit teuer und tierischen Ursprungs. Es ist somit noch nicht umfassend geeignet für die gewerbliche Anwendung und nicht geeignet für Veganer und Vegetarier. Des Weiteren wachsen die Zellen nur bedingt dreidimensional. Dazu werden sogenannte Scaffoldstrukturen benötigt, die noch nicht weit genug entwickelt sind. Eine Versorgung mit Nährstoffen für Strukturen aus Zellen mit mehr als wenigen Zentimetern ist nicht gelöst. Hinzu kommt, dass der Energieaufwand während des Zellwachstums sehr hoch ist.

Bei der Fermentation von Proteinen im Bioreaktor ist das Ziel, Proteine herzustellen und/oder Mikrofibrillen auszubilden. Gerade Mikrofibrillen ähneln stark der faserigen Struktur, die man von Pilzen kennt. Es bilden sich Strukturen aus, die von der Bissfestigkeit an Fleisch erinnern. Allerdings wachsen diese Strukturen wirr. Die übergeordnete Struktur der Fibrillen weist keine starke Orientierung in eine Richtung aus. Sie ähneln eher Schwämmen. Darüber hinaus ist das Wachstum derzeit prozesstechnisch auf kleinere Reaktoren begrenzt. Die Mengen sind noch nicht skalierbar. Die erhaltenen Strukturen aus Mikrofibrillen enthalten ein Material. Weitere Füll- und Geschmacksstoffe müssen zu einem späteren Zeitpunkt hinzugefügt werden.

Somit werden im Stand der Technik viele Ansätze verfolgt, um Fleischersatzprodukte herzustellen, die tierischen Fleischprodukten in Geschmack und Aussehen sehr nahe kommen. Eine besonders gelungene und effiziente Nachahmung von Fleisch mittels der derzeitig bekannten Verfahren und Technologien ist momentan noch nicht oder nur eingeschränkt möglich. Mithin liegt ein Bedarf vor, effizient Fleischersatzprodukte herzustellen, die besonders gut tierisches Fleisch simulieren können.

### Aufgabe der Erfindung

Aufgabe der vorliegenden Erfindung war es, die Nachteile des Standes der Technik zu beseitigen. Insbesondere war es eine Aufgabe der Erfindung, ein verbessertes, effizienteres Verfahren zu bieten, um Fleischersatzprodukte herzustellen. Des Weiteren sollten die hergestellten Fleischersatzprodukte besonders realitätsnah tierischen Fleischprodukten kommen, um in Zubereitung, Geschmack und Optik einem Verbraucher ein möglichst hohes Wirklichkeitsgefühl zu vermitteln. Darüber hinaus sollten das Verfahren und das damit herstellbare Fleischersatzprodukt für eine Massenproduktion tauglich sein.

### Zusammenfassung der Erfindung

Die erfindungsgemäße Aufgabe wird gelöst durch die Merkmale der unabhängigen Ansprüche 1 und 12. Vorteilhafte Ausgestaltungen der Erfindung sind in den abhängigen Ansprüchen beschrieben.

Es ist ein besonderer Vorteil des erfindungsgemäßen Verfahrens, dass das damit hergestellte Fleischersatzprodukt tierische Fleischprodukte besonders realitätsnah nachahmt. Das liegt insbesondere daran, dass es das erfindungsgemäße Verfahren erlaubt, die Nährwertzusammensetzung der Filamente bevorzugt in Verfahrensschritt a) gezielt einzustellen und im Verfahrensschritt b) entsprechend anzuordnen. Dies wirkt sich ebenfalls vorteilhaft auf die Geschmackszusammensetzung aus, sodass einem Verbraucher das Gefühl vermittelt werden kann, dass er tierisches Fleisch konsumiert.

Ein großer Vorteil des erfindungsgemäßen Verfahrens ist auch der Effekt, dass durch die Erstellung einer Filamentanordnung mit vordefinierten Regionen für mindestens zwei Fleischnachahmungskomponenten bekannte Fleischkomponenten hinsichtlich ihrer Positionierung und auch ihrer Zusammensetzung präzise nachgebildet werden können. Insbesondere wird es vorteilhaft ermöglicht, die Fleischersatzprodukte reproduzierbar herzustellen, sodass mit entsprechend vorgenommen Einstellungen die Fleischersatzprodukte sich in Geometrie und/oder Anordnung im Wesentlichen gleichen. Somit weist das erfindungsgemäße Verfahren und damit das Fleischersatzprodukt selbst vorteilhaft eine Programmierfähigkeit auf, wobei die Programmierfähigkeit vorzugsweise dahingehend zu verstehen ist, dass es gezielt und reproduzierbar möglich ist, dass die Filamente gewisse Inhaltsstoffe aufweisen und gezielt angeordnet werden können, um detailgetreue Fleischnachahmungskomponenten im Fleischersatzprodukt zu bilden. Insbesondere kann durch die Programmierfähigkeit des erfindungsgemäßen Verfahrens die genaue Position von Filamentsorten bestimmten Positionen im Fleischersatzprodukt zugeordnet werden. Dabei bezeichnet eine Filamentsorte eine Mehrzahl von Filamenten, die im Wesentlichen gleiche Inhaltsstoffe aufweisen. Daher gelingt es dem Verfahren, Filamente besonders wirklichkeitsgetreu in das Fleischersatzprodukt einzubringen.

Beispielsweise können die Filamente derart angeordnet werden, dass sie im Fleischersatzprodukt Muskelfasern und/oder Fette nachbilden können. So kann vorteilhaft besonders präzise ein Fleischprodukt simuliert werden, dass sowohl Muskelfasern und/oder Fette und/oder andere Fleischkomponenten wie beispielsweise Sehnen, Haut, Knorpel und/oder Knochen enthält. Insbesondere kann die Struktur des Fleischersatzproduktes durch die Ausgestaltung der Filamente hinsichtlich der Marmorierung und der genauen Position von Fleischnachahmungskomponenten imitiert werden. Dabei bezeichnet die Marmorierung die Verteilung des Fettgewebes im Fleisch. Wegen der farblichen Unterschiede zwischen Fett und Muskelgewebe entsteht ein sichtbares Muster, das an die Struktur von Marmor erinnert, weshalb der Begriff Marmorierung verwendet wird. Vorteilhaft kann die Marmorierung des Fleischersatzproduktes besonders effizient hergestellt werden. Vorteilhafterweise führt das erfindungsgemäße Verfahren dazu, dass die mehrkomponentigen Filamente in unterschiedlichen Geometrien mit unterschiedlichen Durchmessern bereitgestellt werden können. Vorteilhaft kann somit eine Vielzahl von Fleischprodukten imitiert werden, ohne auf eine bestimmte Fleischsorte begrenzt zu sein. Mögliche Fleischsorten, die vorteilhaft imitiert werden können, sind bevorzugt ausgewählt aus einer Gruppe umfassend Rind, Lamm, Schwein, Geflügel, Fisch und/oder Muscheln, jedoch nicht darauf beschränkt.

Durch das erfindungsgemäße Verfahren kann vorteilhafterweise ein hohes Maß an Individualisierbarkeit mit gleichzeitig besonders hoher Produktivität erreicht werden. Somit ist das erfindungsgemäße Verfahren vorteilhaft auch für eine Massenproduktion geeignet und hat sich als besonders prozesseffizient und wirtschaftlich erwiesen.

Die Filamente weisen mehrere Komponenten auf. Bevorzugt meinen Komponenten der Filamente Inhaltsstoffe, wobei diese einen oder mehreren Teilbereichen einer Struktur der Filamente zugeordnet werden können. So kann in bevorzugten Ausführungsformen das Filament eine Kern-Mantel-Struktur aufweisen. In weiteren bevorzugten Ausführungsformen kann das Filament als eine See-Insel-Struktur aufgebaut sein.

In vielen Verfahren des Standes der Technik werden Filamente eingesetzt, die lediglich eine Material (Monomaterial) umfassen. Die besondere Textur von tierischem Fleisch basiert jedoch auf der Kombination von mindestens zwei Materialien in der Muskelfaser. In der Muskelfaser umgibt eine Kollagenhülle (das Endomysium) einen Proteinkern (Myosinfibrille). Das Bissverhalten bei Fleisch beruht auf dem Durchbeißen von Millionen von Kollagenhüllen, die einen saftigen Proteinbrei umschließen und/oder dem Abgleiten von parallel zueinander angeordneten Faserbündeln durch den Druck infolge des Kauens. Dieses Bissverhalten ist mit einem Monomaterial nicht nachzubilden.

Das erfindungsgemäße Verfahren beseitigt diesen Nachteil des Standes der Technik durch die Bereitstellung von mehrkomponentigen Filamenten, die vorteilhaft Komponenten von tierischem Fleisch, wie z. B. Muskelfasern, besonders gut imitieren können.

Insbesondere der Aufbau und die Zusammensetzung der Filamente wirken sich sehr vorteilhaft auf die Feuchtigkeit sowie das Geschmacks- und Nährstoffprofil des Fleischersatzproduktes aus.

So kann die Möglichkeit geschaffen werden, in Bezug auf den Feuchtegehalt das Geschmackserlebnis, Biss- und Kauverhalten genau nachzubilden.

Das erfindungsgemäße Verfahren ist als Produktionsprozess selbst besonders effektiv. Ebenfalls wirkt sich das Verfahren vorteilhaft auf das damit herstellbare Fleischersatzprodukt aus.

Die Struktur der Filamente umfassend einen Ummantelungsstoff und einen Füllstoff hat sich dahingehend als besonders vorteilhaft erwiesen, dass der Ummantelungsstoff zeitgleich eine feste Hülle zum Einschluss des Füllstoffes darstellt und ebenfalls eine ausreichende Elastizität aufweist. Vorteilhaft lässt sich hierüber das Fleischersatzprodukt optimal verzehren, beispielsweise während eines Schnitts mit einem Messer oder bei der Einfuhr einer Gabel in das Fleischersatzprodukt. Des Weiteren verfügt der Füllstoff, insbesondere als Emulsion, eine niedrige Viskosität, sodass ein weicher und saftiger Kern bereitgestellt wird. In einem späteren Hitzeprozess, beispielsweise beim Braten von einem Konsumenten, kann eine optimale Reaktion erfolgen, um auch die Zubereitung wie bei einem echten Fleischprodukt realitätsnah nachzuahmen.

So kann vorteilhaft die Menge an enthaltener Feuchtigkeit, d. h. Wasser, im Fleischersatzprodukt reguliert werden. Insbesondere kann Feuchtigkeit, nachdem das Fleischersatzprodukt zubereitet und daraufhin geschnitten wird, aus dem Fleischersatzprodukt definiert und/oder reguliert austreten. Das Austreten und/oder Vorliegen eines bestimmten Feuchtigkeitsgehalts im Fleischersatzprodukt wirkt sich vorteilhaft auf den Geschmack und auch auf das Bissverhalten eines Verbrauchers aus. Es ist bekannt, dass zu trockenes Fleisch nicht ideal für den Verzehr geeignet ist, insbesondere da es zu kauen ist. Das mittels des erfindungsgemäßen Verfahrens herstellbare Fleischersatzprodukt beseitigt vorteilhaft den Nachteil des Standes der Technik eines ungeeigneten Biss- und/oder Kauverhaltens, insbesondere durch die Möglichkeit, den Feuchtigkeitsgehalt im Fleischersatz gezielt einstellen zu können.

In Verfahrensschritt a) erfolgt eine Bereitstellung einer Mehrzahl von mehrkomponentigen Filamenten umfassend Wasser, und zusätzlich Proteine und/oder Fette und/oder weiteren Inhaltsstoffen wie beispielsweise Aromen oder Farbstoffe, wobei jeweils jedes Filament ein Ummantelungsstoff und ein Füllstoff umfasst, wobei der Ummantelungsstoff den Füllstoff umhüllt.

Vorteilhafterweise lässt sich das Geschmacks- und Nährstoffprofil gezielt innerhalb der Filamente einstellen. Eine Vielzahl unterschiedlicher Proteine, Fette und/oder andere Aroma-, Geschmacks- und weitere Zusatzstoffe lassen sich in fast beliebiger Kombination in die Filamente integrieren. Somit kann das Freisetzen dieser Stoffe gezielt gesteuert werden. Aromen werden beispielsweise erst beim Durchbeißen der Filamente oder bei Kontakt der Filamente mit der Zunge und/oder dem Gaumen freigesetzt. Dadurch kann die Aromafreigabe eines echten Stück Fleisches besser nachgebildet werden als im Stand der Technik.

Im Sinne der Erfindung bezeichnet ein Fleischersatzprodukt ein Produkt, das hinsichtlich der Konsistenz, der Bissfestigkeit und/oder dem Geschmack ein auf Fleisch basiertem Produkt möglichst ähnlich ist, allerdings keine Fleischrohstoffe beinhaltet. Dadurch können Vegetarier und Veganer auch ohne den Konsum von Fleisch auf Produkte zurückgreifen, welche in der Regel ansonsten ausschließlich aus tierischen Rohstoffen hergestellt werden.

Ein mehrkomponentiges Filament bezeichnet ein Filament, welches mehrere Komponenten, insbesondere mindestens zwei Komponenten, aufweist. Insbesondere ist ein Filament im Sinne der Erfindung eine Faser mit beliebiger Länge. Vorzugsweise weist das Filament eine praktisch unbegrenzte Länge auf, z. B. ca. 500 m (Meter), 1000 m, 2000 m oder mehr.

Begriffe wie im Wesentlichen, ca. etc. beschreiben bevorzugt einen Toleranzbereich von weniger als ± 40 %, bevorzugt weniger als ± 20 %, besonders bevorzugt weniger als ± 10 %, noch stärker 30 bevorzugt weniger als ± 5 % und insbesondere weniger als ± 1 % und umfassen insbesondere den exakten Wert. Teilweise beschreibt bevorzugt zu mindestens 5 %, besonders bevorzugt zu mindestens 10 %, und insbesondere zu mindestens 20 %, in einigen Fällen zu mindestens 40 %.

Bevorzugt ist das Filament derart aufgebaut, dass ein Filament einen Ummantelungsstoff und einen Füllstoff umfasst, wobei der Ummantelungsstoff den Füllstoff umhüllt. Somit bezeichnet bevorzugt der Ummantelungsstoff die Gesamtheit der Inhaltsstoffe, die den Füllstoff umgeben. Somit liegt vorzugsweise zwischen der Umgebung und dem Füllstoff der Ummantelungsstoff vor. Der Füllstoff bezeichnet bevorzugt die Gesamtheit der Inhaltsstoffe, die sich innerhalb eines Volumen befinden, das durch den Ummantelungsstoff gebildet wird. Damit ist insbesondere gemeint, dass die Filamente nicht hohl sind und zwei Strukturkomponenten, d. h. Komponenten zur Ausbildung einer Struktur, aufweisen, nämlich den Ummantelungsstoff und den Füllstoff. Mit dem Ausdruck "Gesamtheit der Inhaltsstoffe" ist vorzugsweise gemeint, dass der Ummantelungsstoff und/oder der Füllstoff einen oder mehrere Inhaltsstoffe aufweisen kann.

Das Filament weist eine Kern-Mantel-Struktur auf. In bevorzugten Ausführungsformen kann das Filament eine See-Insel-Struktur umfassen.

Eine Kern-Mantel-Struktur bezeichnet im Sinne der Erfindung vorzugsweise eine derartige Struktur, bei dem der Füllstoff einen Kern bildet und der Ummantelungsstoff den umhüllenden Mantel.

Eine See-Insel-Struktur bezeichnet im Sinne der Erfindung vorzugsweise eine derartige Struktur, bei dem der Füllstoff durch eine größere Anzahl an inneren Strukturkomponenten für das Filament gebildet wird und vom Ummantelungsstoff umgeben ist. Die inneren Strukturkomponenten zeichnen sich durch einen besonders filigranen und/oder geringen Durchmesser auf, beispielsweise unter ca. 40 µm (Mikrometer). Insbesondere können bei einer See-Insel-Struktur mehrere Kerne vorliegen. Vorteilhafterweise erlaubt die See-Insel-Struktur die Produktion feinerer Filamentkerne, da beispielsweise mehrere Kerne aus einer Düsenöffnung gebündelt abgezogen werden können.

Dabei ist es bevorzugt, dass der Füllstoff einen Durchmesser zwischen ca. 5 und 150 µm aufweist. Das Filament selbst kann bevorzugt einen Durchmesser zwischen ca. 40 µm und 10 mm haben.

Vorteilhaft können mittels des erfindungsgemäßen Verfahrens Filamente bereitgestellt werden, die besonders gut in Komposition, Geschmack, Bissverhalten und/oder Optik Fleischnachahmungskomponenten bilden können.

In einer weiteren bevorzugten Ausführungsform ist das Verfahren dadurch gekennzeichnet, dass die Filamente Cellulose und/oder Proteine aufweisen, insbesondere zusätzlich zum Alginat. Vorzugsweise liegen Cellulose und/oder Proteine als Cellulosefasern und/oder Proteinfasern vor. Vorteilhafterweise wird das Mundgefühl in Bezug auf Kauwiderstand und Saftigkeit verbessert, während ein Konsument das Fleischersatzprodukt verzehrt. Bevorzugt wird durch die Cellulose, insbesondere durch die Cellulosefasern, vorteilhaft Flüssigkeit im Wesentlichen gleichmäßig im Mund abgegeben, sodass im Mund selber die Abgabe von Fleischsaft imitiert und/oder nachgeahmt werden kann. Durch die Proteine, insbesondere Proteinfasern, wird vorteilhaft der Kauwiderstand erhöht, was die Nachahmung des Verzehrs von echtem Fleisch ebenfalls verbessert. Die bevorzugte Cellulose und/oder Proteine liegen besonders bevorzugt vor, wenn das Filament eine Kern-Mantel-Struktur aufweist.

Die Filamente weisen erfindungsgemäß eine Querschnittsfläche zwischen 0,03 - 3 mm², bevorzugt zwischen 0,04 - 2,5 mm², besonders bevorzugt zwischen 0,08 - 0,3 mm² auf.

Die genannten Querschnittsflächen der Filamente haben sich dahingehend als vorteilhaft erwiesen, dass eine besonders feine Faserung der Fleischnachahmungskomponenten gebildet werden kann. Zudem lassen sich die Filamente besonders einfach im Kontext eines Pultrusionsverfahren und/oder durch eine Anordnung von einem oder mehreren Gittern überführen, um gebündelt zu werden und das Fleischersatzprodukt zu bilden.

In bevorzugten Ausführungsformen sind im Fleischersatzprodukt 50 - 10 000 Filamenten, beispielsweise 100 - 5000 oder 500 - 2000 Filamenten, miteinander verbunden.

Durch die Anzahl der Filamente kann die Größe und/oder die Kompaktheit, insbesondere die Dichte an Filamenten für einzelne Fleischnachahmungskomponenten im Fleischersatzprodukt bestimmt werden. Insbesondere kann durch eine höhere Anzahl an Filamenten zur Nachahmung einer Fleischkomponente das Geschmackserlebnis diesbezüglich intensiviert werden. Eine Vielzahl von Proteinfilamenten kann beispielsweise ein besonders intensives Fleischgeschmackserlebnis für den Konsumenten ermöglichen. Eine hohe Anzahl an Fettfilamenten kann den Geschmack von Fett besonders intensiv beim Konsumenten ausprägen.

Des Weiteren kann durch die Dichte der Filamente die Textur des Fleischersatzproduktes angepasst und/oder eingestellt werden. Damit kann durch die Ausgestaltung der Filamente, hinsichtlich der Dichte, Anzahl und/oder Größe, die Festigkeit und/oder das äußere Erscheinungsbild, insbesondere in Bezug auf Marmorierung und/oder Farbe, des Fleischersatzproduktes reguliert werden.

Dabei sind im Sinne der Erfindung vorzugsweise Fleischnachahmungskomponenten jene Bestandteile des Fleischersatzproduktes, die Fleischkomponenten durch die Filamente imitieren.

Bevorzugte imitierte Fleischkomponenten als Fleischnachahmungskomponenten sind ausgewählt aus einer Gruppe umfassend Muskeln, Fett, Sehnen, Haut, Knorpel und/oder Knochen. Daher kann mithilfe des erfindungsgemäßen Verfahrens ein besonders wirklichkeitsgetreues Fleischersatzprodukt hergestellt werden. Dies begründet sich insbesondere damit, dass besonders effizient Protein- und/oder Fettfilamente bereitgestellt werden können. So können beispielsweise Muskeln und/oder Fett als Fleischnachahmungskomponenten besonders realitätsnah nachgebildet werden.

Ein Fettfilament bezeichnet vorzugsweise Filament, das zur Nachbildung von Fett bereitgestellt wird. Die Begriffe "Fettfilament" und "Lipidfilament" können im erfindungsgemäßen Kontext synonym verwendet werden. Ein Proteinfilament kann insbesondere zur Nachbildung von Muskeln eingesetzt werden. Insbesondere unterscheiden sich Protein- und Fettfilamente in ihren Inhaltsstoffen.

So haben die Erfinder festgestellt, dass zur Bildung eines Proteinfilaments für Muskeln als Fleischnachahmungskomponenten eine besonders vorteilhafte Zusammensetzung gebildet wird durch ca. 70 - 90 % Wasser, ca. 5 - 20 % pflanzliche Proteine (beispielsweise gewonnen aus Sonnenblumen, Erbsen, Soja, Reis, Algen), ca. 1 - 10 % Methylcellulose, 1 - 5 % Alginat, ca. 0 - 10 % Fett, ca. 0 % - 3 % Farbstoffe und ca. 0 - 3 % Aromastoffe.

In bevorzugten Ausführungsformen weisen die Proteinfilamente einen Wasseranteil von über 26 % auf, bevorzugt von über 30 %, besonders bevorzugt von über 35 %, 40 %, 45 %, oder von über 50 % auf, oder sogar von über 60 % auf.

Der vergleichsweise hohe Wasseranteil der Filamente wirkt sich vorteilhaft während des Geschmackserlebnisses des erfindungsgemäß herstellbaren Fleischersatzproduktes beim Konsum bzw. Verzehr aus. Insbesondere unter dem Einsatz von Methylcellulose bleibt nach der Zubereitung des Fleischersatzproduktes ein hoher Wasser- bzw. Feuchtigkeitsanteil übrig, sodass einem Konsumenten ein hohes Saftigkeitsgefühl vermittelt wird. Zudem kann nach einem Schnitt des Fleischersatzproduktes Wasser (Feuchtigkeit) austreten, sodass ein besonders realitätsnahes Gefühl beim Konsumenten erweckt werden kann.

Insbesondere werden keine texturierten Proteine eingesetzt, wie es aus der Lehre der WO 2021 /191906 A1 hervorgeht. Erfindungsgemäß liegen die Proteine vorzugsweise dispergiert in einer Emulsion innerhalb des Füllstoffes umhüllt vom (vernetzten) Alginat als Ummantelungsstoff vor. Dies hat sich in mehreren Aspekten als besonders vorteilhaft erwiesen. Die Proteine werden vorteilhaft nicht im Herstellungsverfahren denaturiert, sodass die Beibehaltung der molekularen Struktur sowie der Biofunktionalität der Proteine gewährleistet wird. Im herstellbaren Fleischersatzprodukt als solches wird eine höhere Saftigkeit erzielt, was das Geschmackserlebnis bei einem Konsumenten verbessert. In der Zubereitung des Fleischersatzproduktes unter Wirkung von Hitze, z. B. beim Braten, können die Proteine vernetzen, sodass, je nach Hitze (Temperatur) und/oder Dauer der Hitze, die Garstufe optimiert werden kann. Hierdurch können vorteilhaft Garstufen nachgeahmt werden, wie sie bei echtem Fall üblich sind.

Zur Bildung eines Filaments für Fett als Fleischnachahmungskomponente hat sich als besonders vorteilhafte Zusammensetzung ca. 50 % - 90 % Wasser, ca. 10 % - 40 % pflanzliches Fett (beispielsweise Palmöl, Kakaobutter und/oder Sonnenblumenöl), ca. 0 - 10 % ca. 5 - 20 % pflanzliche Proteine (beispielsweise gewonnen aus Sonnenblume), Erbsen, Soja, Reis, Algen), ca. 1 % - 5 % Methylcellulose, ca. 0 % - 5 % Farbstoffe und ca. 0 % - 5 % Aromastoffe.

Vorteilhaft können durch das erfindungsgemäße Verfahren besonders präzise und effektiv Fettfilamente in eine Filamentanordnung eingebracht werden, um Fett als Fleischnachahmungskomponente bereitzustellen. Dabei ist es bevorzugt, dass das Filament selbst Fett enthält. Vorteilhafterweise werden also zusätzliche Prozessschritte nicht benötigt, in denen beispielsweise das Filament durch ein mit Fett enthaltenes Bad gezogen wird. In einigen Verfahren des Standes der Technik ist es auch üblich, Fett in das Fleischersatzprodukt zu integrieren, indem Fett in einem essbaren Binder vorliegt und mit den Filamenten kontaktiert wird. Solche Prozessschritte wirken sich ineffizient auf den Prozessablauf aus. Vorteilhafterweise werden diese Nachteile des Standes der Technik behoben, indem direkt ein Fettfilament bereitgestellt werden kann.

Proteine werden aus vielen unterschiedlichen miteinander verknüpften Aminosäuren aufgebaut. Sie bilden Nährstofflieferanten für den Endverbraucher. Für das Fleischersatzprodukt selbst dienen Proteine auch als Strukturgeber auf unterschiedlichen Ebenen des Fleischersatzprodukts, nämlich in der molekularen Ebene, Filamentebene, Filamentbündelebene und/oder in dem Fleischersatzprodukt selbst. Über die Struktur kann das Kauverhalten eingestellt werden. Auch können die Filamente besonders effizient weiterverarbeitet werden. Es ist im Sinne der Erfindung bevorzugt, dass Proteine eingesetzt werden, die sich bei einer Temperatur zwischen ca. 20°C - 8°C und/oder innerhalb von ca. 1 min - 60 min (Minuten) vernetzen können und/oder enzymatisch vernetzbar sind (beispielsweise mithilfe von Transglutaminase).

Die Quelle der Proteine kann im Rahmen der Erfindung vielfältig sein. So kann es in Ausführungsformen der Erfindung bevorzugt sein, dass die Proteine von Pflanzen und/oder Tieren stammen. In weiteren bevorzugten Ausführungsformen können die Proteine im Labor gezüchtete Proteine auf tierischer (sogenannte "lab grown Proteine") und/oder im Labor gezüchtete Proteine auf pflanzlicher (beispielsweise durch "fermented" oder "precision fermented" Verfahren) Basis sein. Bei der Fermentation (fermented) werden der Proteingehalt und das schnelle Wachstum von Mikroorganismen genutzt, um auf effiziente Weise die Proteine als solche bereitzustellen. Bei der Fermentation sind bevorzugt die Mikroorganismen, die sich durch diesen Prozess vermehren, selbst Zutaten für die Proteine. Bei der Präzisionsfermentation (precision fermented) werden mikrobielle Wirte als Zellfabriken zur Herstellung der Proteine eingesetzt. Dabei können die mikrobiellen Wirte vorzugsweise dahingehend programmiert werden, dass sie komplexe organische Moleküle wie Proteine bereitstellen können. In weiteren bevorzugten Ausführungsformen können die Proteine aus im Labor synthetisierten Aminosäuren stammen.

Fette bilden auch einer der wichtigsten Energielieferanten für den menschlichen Körper. In Fett lassen sich besonders gut Aromastoffe lösen. Auch für den Geschmack des Fleischersatzproduktes sind Fette relevant, da sie hervorragende Geschmackträger sind. Außerdem ist Fett Träger bestimmter Vitamine, die für den Menschen wertvoll sind, wie beispielsweise Vitamine A, D und/oder E. Vorzugsweise sind die Fette pflanzliche Fette.

In Verfahrensschritt b) wird eine Filamentanordnung mit vordefinierten Regionen für mindestens zwei Fleischnachahmungskomponenten gebildet, umfassend der in Verfahrensschritt a) bereitgestellten Filamente. Dabei werden vorzugsweise die Filamente miteinander verbunden und die Filamentanordnung als Fleischersatzprodukt geformt.

Eine Filamentanordnung bezeichnet im erfindungsgemäßen Kontext eine Anordnung umfassend der bereitgestellten Filamente. Dabei kann eine Filamentanordnung eine oder mehrere Filamentsorten umfassen kann, insbesondere um eine oder mehrere Fleischnachahmungskomponenten zu bilden.

Das Verbinden der Filamente meint insbesondere eine derartige Verbindung zwischen den Filamenten, dass sie nicht leicht auseinanderfallen, um ein stabiles Fleischersatzprodukt nach der Durchführung des Verfahrens zu bilden.

Das Formen der Filamente umfasst insbesondere das Verpressen und/oder das Schneiden der Filamente und/oder der Filamentanordnung. Weiterhin ist es bevorzugt, dass die Filamente zu Bündeln zusammengefasst werden. Das Formen umfassend das Verpressen und/oder Schneiden kann auch auf die Filamentbündel zutreffen. Vorzugsweise sind beim Filamentbündel die Filamente bereits miteinander verbunden. Vorteilhafterweise können somit verschiedene Formen für das Fleischersatzprodukt ermöglicht werden, wie beispielsweise Steaks, Patties, Fischfilet und/oder Schenkel.

Vorzugsweise liegen im fertiggestellten Fleischersatzprodukt Anteile der in Verfahrensschritt a) bereitgestellten Filamente vor. In einer bevorzugten Ausführungsform umfasst das Fleischersatzprodukt ca. 0,5 % - 100 %, oder 0,5 % - 99 %, bevorzugt ca. 1 - 50 %, oder ca. 1 - 20 %, besonders bevorzugt ca. 2 - 10 %, der in Verfahrensschritt a) bereitgestellten Filamente.

Vorteilhafterweise lässt sich durch das bevorzugte Verfahren der Anteil der Filamente, welche in Verfahrensschritt a) bereitgestellt werden, im Fleischersatzprodukt selbst präzise und einfach einstellen. Hierdurch kann eine zielgerichtete Einstellung der Zusammensetzung des Fleischersatzproduktes vorgenommen werden, was sich auf die Zubereitungsweise, das Geschmackserlebnis, das Kauverhalten und/oder das äußere Erscheinungsbild vorteilhaft auswirken kann. Eine besonders gelungene Einstellung der Anteile der in Verfahrensschritt a) bereitgestellten Filamente im Fleischersatzprodukt wird durch den Einsatz eines Pultrusionsverfahrens ermöglicht.

In einer weiteren bevorzugten Ausführungsform ist das Verfahren dadurch gekennzeichnet, dass der Ummantelungsstoff Alginat umfasst, wobei vorzugsweise der Ummantelungsstoff eine Außenhülle umfassend vernetztes Alginat an einer Außenseite des Filaments bildet und Alginat innerhalb des Füllstoffs vorliegt.

Alginat wird chemisch über eine Abbindereaktion vernetzt. Bei Anwesenheit zweiwertiger Metallionen (beispielsweise Ca2+-lonen) kommt es in wässriger Lösung zu einer Vernetzung der vorher einkettigen wasserlöslichen Alginatmakromoleküle. Es entsteht das wasserunlösliche Calcium-Alginat. Als Abbindemittel werden vorzugsweise Calciumlactate verwendet. Andere Abbindemittel als Calciumlactate sind ebenfalls möglich.

Vorzugsweise wird Alginat als eine Ausgangskomponente im erfindungsgemäßen Verfahren eingesetzt, um die Filamente bereitzustellen. Vorteilhafterweise hat sich hierbei gezeigt, dass Alginat ein hervorragendes Kollagenersatz bildet. Kollagene sind Strukturproteine des Bindegewebes von vielzelligen Tieren. Kollagene finden sich unter anderem in den weißen, unelastischen Fasern von Sehnen, Bändern, Knochen und Knorpeln. Alginat hat sich hierbei als besonders effizientes Substituent für Kollagen gezeigt, sodass auf tierisches Kollagen vorteilhafterweise vollkommen verzichtet werden kann.

Darüber hinaus wirkt Alginat vorteilhaft auf die Strukturbildung der Filamente. Insbesondere liefert Alginat eine Festigkeit als Ummantelungsstoffs eines einzelnen Filaments. So lassen vorteilhafterweise mechanische Eigenschaften der Filamente in einem weiten Spektrum optimieren. So können sehr weiche bis zu sehr zähe Fleischersatzprodukte hergestellt werden.

Des Weiteren werden vorteilhafterweise Filamente durch das vernetzte Alginat als Außenhülle besonders sicher in der Filamentanordnung und/oder dem Filamentbündel zusammengehalten. Somit kann insbesondere durch das Kollagen und die Verteilung und/oder Anordnung der Filamente Fleischnachahmungskomponenten gebildet werden, wie beispielsweise Muskelstränge, Fettgewebe und/oder andere Bindegewebsstrukturen. Somit können die Fleischnachahmungskomponenten der Zusammensetzung und Textur verschiedener Fleischsorten besonders realistisch entsprechen.

Im Sinne der Erfindung bezeichnet vernetztes Alginat ein Alginat, welches als Ummantelungsstoff die Außenhülle eines Filaments bildet. Insbesondere zeichnet sich das vernetzte Alginat durch ein verknüpftes Netzwerk von Alginatmolekülen aus. Vorteilhaft kann hierüber die Bissfestigkeit und/oder die Zähigkeit reguliert werden.

In weiteren bevorzugten Ausführungsformen kann auch Chitosan eingesetzt werden, insbesondere in Kombination mit Alginat. Vorteilhaft dient Chitosan der Vernetzung und kann auch antimikrobiell wirken und damit die Haltbarkeit des Fleischersatzprodukts gezielt verlängern.

In einer weiteren bevorzugten Ausführungsform ist das Verfahren dadurch gekennzeichnet, dass der Füllstoff ein Verdickungsmittel, ein Bindemittel und/oder einen Emulgator umfasst, wobei der Füllstoff vorzugsweise Methylcellulose umfasst.

In einer weiteren bevorzugten Ausführungsform ist das Verfahren dadurch gekennzeichnet, dass der Füllstoff ausgewählt ist aus einer Gruppe umfassend Alginat, Fett, Proteine, bevorzugt Sojaproteine und/oder Erbsenproteine und/oder Sonnenblumenprotein, Calciumlactat, Calciumchlorid, Wasser, Methylcellulose, Lipide, Aromastoffe, Vitamine, Mineralstoffe, Spurenelemente und/oder Farbstoffe.

Insbesondere hat sich Alginat auch als vorteilhafter Inhaltsstoff des Füllstoffs erwiesen, da es besonders gut andere Inhaltsstoffe wie Wasser, Aroma- und/oder Farbstoffe binden kann. Insbesondere kann Alginat somit sowohl im Füllstoff als auch im Ummantelungsstoff enthalten sein, wobei es vorzugsweise im Ummantelungsstoff ein Netzwerk ausbildet, insbesondere eine Alginathülle.

In weiteren bevorzugten Ausführungsformen des erfindungsgemäßen Verfahrens kann Alginat auch von außen zugeführt werden, wobei dann ein Abbindemittel, vorzugsweise Calciumlactat, als Komponenten des Füllstoffs eingesetzt werden.

Darüber hinaus bildet Calciumlactat ein geeignetes Abbindemittel für das Alginat, um insbesondere den Ummantelungsstoff zu bilden. Die Kationen des Calciums reagieren mit dem Alginat, sodass sich ein Netzwerk aus umfassend vernetztem Alginat bildet. Daher kann im erfindungsgemäßen Kontext der Ummantelungsstoff auch als Alginathülle beschrieben werden.

In weiteren bevorzugten Ausführungsformen kann auch Calciumsulfat eingesetzt werden. Durch das Calciumsulfat kann vorteilhaft das Alginat einen festen Verbund bilden. Vor der Reaktion mit dem Calciumsulfat kann das Alginat in einem gelartigen Zustand sein, der durch die Reaktion mit dem Calciumsulfat verfestigt wird.

Methylcellulose ist dahingehend vorteilhaft, dass begünstigend zur Erhaltung der Feuchtigkeit im hergestellten Fleischersatzprodukt wirkt. Insbesondere kann die Feuchtigkeit innerhalb der Alginathülle chemisch, in der Methylcellulose im Füllstoff chemisch und in einer Polymerstruktur der vernetzten Proteine mechanisch gespeichert werden. Somit kann das Geschmackserlebnis insbesondere hinsichtlich der Restfeuchte sehr gut nachgebildet werden.

Des Weiteren kann durch definierte Zugabe von Methylcellulose das Wasserrückhaltevermögen beim Braten des Fleischersatzproduktes vorteilhafterweise gesteuert werden, sodass eine Restfeuchte beim Braten des Fleischersatzproduktes bleibt. Dies begründet sich insbesondere damit, dass auch Methylcellulose vorzugsweise ein Netzwerk bildet, sodass bei einer Temperaturzufuhr, wie beispielsweise beim Braten, das Wasser nicht in unbegrenzter Menge austreten kann.

Auch hat Methylcellulose eine vorteilhafte Wirkung auf die Fettfaser. Zur Bildung von Fettfasern legt sich die Methylcellulose um das Fett, sodass die Filamente stabil miteinander verbunden sind, um vorteilhafterweise ein Auseinanderfallen der Filamente zu verhindern.

Lipide sind insbesondere in Bezug auf die Bereitstellung von Fettfilamenten relevant. Vorzugsweise werden Lipide auch eingesetzt, um Proteinfilamente zur Bildung von Muskeln als Fleischnachahmungskomponenten zu bilden. Vorzugseise werden sie mit einem Anteil von bis zu ca. 10 % zur Bereitstellung von Proteinfilamente eingesetzt. Zur Bereitstellung von Fettfilamenten werden Lipide bevorzugt mit einem höheren Anteil eingesetzt.

Verdickungsmittel werden insbesondere eingesetzt, um auf die Konsistenz und/oder der Textur des Fleischersatzproduktes vorteilhaft zu wirken. Insbesondere können unerwünschte Separationsvorgänge während der Lagerung, während des Herstellungsverfahrens und/oder im Fleischersatzprodukt, wie das Absetzen von Partikeln und/oder eine Phasentrennung, verlangsamt und/oder verhindert werden.

Durch Bindemittel können Inhaltsstoffe an Phasengrenzen chemische Bindungen bilden, begünstigen und/oder Effekte wie Kohäsion, Adsorption und/oder Adhäsion auslösen und/oder vergrößern. Sie verbinden Inhaltsstoffe, indem sie diese aufnehmen, anlagern, zusammenhalten, vernetzen und/oder verkleben. Vorzugsweise sind die Bindemittel ausgewählt aus einer Gruppe umfassend Pektine (E440), Guarkernmehl (E412), Johannisbrotkernmehl (E410), Stärke, Sago, Gummi arabicum (E414), Carrageen (E407), Xanthan (E415), Alginsäure und/oder Alginate (E400-E405).

Emulgatoren sind Hilfsstoffe, die dazu dienen, zwei nicht miteinander mischbare Flüssigkeiten, wie zum Beispiel Öl und Wasser, zu einem fein verteilten Gemisch, der sogenannten Emulsion, zu vermengen und zu stabilisieren. Ähnliches gilt für die Aufmischung von festen, nicht löslichen Stoffen in einer Flüssigkeit, um eine sogenannte Suspension zu stabilisieren. Ein in Wasser wirksamer Emulgator hat bevorzugt im Molekül eine sehr gut wasserlösliche Teilstruktur (z. B. Polyol) sowie eine gut fettlösliche Teilstruktur (z. B. Fettalkohol oder Fettsäure). Vorzugsweise ist ein Emulgator ausgewählt aus einer Gruppe umfassend Lecithine, Mono- und/oder Diglyceride von Speisefettsäuren.

Der bevorzugte Einsatz von Sojaproteinen, Erbsenproteinen und/oder Sonnenblumenproteine hat sich dahingehend als vorteilhaft erwiesen, dass diese Proteine in ihrer Beschaffung kostengünstig sind und eine prozesseffiziente Bereitstellung der Filamente ermöglichen. Sie haben sich im Stand der Technik als geeignete Proteine herausgestellt, um einen geeigneten Strukturbildner und auch Nährstofflieferanten für den Verbraucher zu bilden.

Aromastoffe bezeichnen Inhaltsstoffe, die bestimmte Gerüche und/oder Geschmäcker imitieren sollen. Viele Aromen lassen sich auf bestimmte einzelne organische Verbindungen zurückführen. Diese Aromastoffe gehören im Einzelnen chemisch verschiedenen organischen Stoffklassen an. Häufig handelt es sich um Aromaten, Ester, Terpene, Alkylpyrazine, Aldehyde und/oder Ketone.

Farbstoffe sind Farbmittel, die in Lösungsmitteln, wie beispielsweise Wasser oder anderen Lösungsmitteln, löslich sind. Vorzugsweise werden im erfindungsgemäßen Kontext pflanzenbasierte Farbstoffe eingesetzt. Beispiele können hierzu Saft aus roter Bete und/oder Radieschenkonzentrate, Möhren- und/oder Traubenschalen sein. Diese liefern vorteilhaft gute Farbergebnisse, um den Fleischnachahmungskomponenten eine besonders realistische Farbe zu verleihen, wie beispielsweise die rötliche Färbung bei einem Steak oder einem Burgerpattie. Beispielsweise können Muskeln mit hellroter, dunkelroter Färbung und Fett durch eine weiße Färbung von Filamenten simuliert werden. Vorteilhafterweise gelingt es dem erfindungsgemäßen Verfahren, durch die Anordnung der Filamente mit vordefinierten Regionen verschiedene Bereiche von echtem Fleisch besonders gut zu simulieren.

In einer weiteren bevorzugten Ausführungsform ist das Verfahren dadurch gekennzeichnet, dass vor dem Verfahrensschritt a) ein Verfahrensschritt a-1) umfassend eine Herstellung der mehrkomponentigen Filamente durch ein Spinnverfahren und/oder ein Extrusionsverfahren durchgeführt wird.

Spinnverfahren, oder einfach nur das Spinnen, bezeichnet bevorzugt Verfahren, um aus einem Polymer oder einem Gemisch Endlosfasern und damit Filamente bereitzustellen. Das Spinnverfahren ist damit eine bestimmte Form der Extrusion, bei der eine Spinndüse verwendet wird, um die Filamente bereitzustellen. Spinnverfahren haben sich vorteilhafterweise als besonders effiziente und einfache Verfahren herausgestellt, um die Filamente für den Verfahrensschritt a) bereitzustellen.

Vorzugsweise ist das Spinnverfahren ausgewählt aus einer Gruppe umfassend Nassspinnen, Trockenspinnen-, Trocken-Nassspinnen, Schmelzspinnen, Gelspinnen und/oder Elektrospinnen.

Beim Trockenspinnen werden die Inhaltsstoffe in einem flüchtigen Lösungsmittel aufgelöst und die Lösung durch eine Spinndüse mit Löchern (ein bis tausende) gepumpt. Wenn die Filamente aus der Spinndüse austreten, wird das Lösungsmittel durch Kontaktierung mit erwärmter Luft verdampft, sodass sich die Filamente verfestigen und gesammelt werden können.

Das Trocken-Nassspinnen ist ein Spinnverfahren, bei dem die Ausgangsstoffe in einem geeigneten Lösungsmittel gelöst und dann unter Hitze und Druck zunächst in einen Luftspalt extrudiert werden, bevor sie in ein Koagulationsbad gelangen. Die hergestellten Filamente werden dann gewaschen und getrocknet, bevor sie weiteren Verfahrensschritten unterzogen werden, wie beispielsweise einer Wärmebehandlung und/oder einer Erstreckung.

Das Schmelzspinnen zeichnet sich dadurch aus, dass die Ausgangsstoffe geschmolzen und/oder durch Hitze vernetzt werden. Nach dem Austritt aus der Spinndüse durchlaufen die Filamente einen Kühlbereich und werden anschließend aufgewickelt. Das Wickeln kann insbesondere durch Wickler und Spulen erfolgen, um eine effizientere Ausrichtung der Proteine und/oder Fette zu erhalten, beispielsweise zur Vermeidung von Hohlräumen.

Gelspinnen ist ein spezielles Spinnverfahren zur Erzielung hoher Festigkeit und/oder weiterer besonderer Eigenschaften. Die Ausgangsstoffe befinden sich während der Extrusion nicht in einem vollständig flüssigen Zustand. Die Polymerketten sind insbesondere nicht vollständig getrennt, wie es in einer Lösung der Fall wäre. Stattdessen sind die Polymerketten an verschiedenen Stellen in Form von Flüssigkristallen gebunden. Dadurch bilden sich in den entstehenden Filamenten starke Kräfte zwischen den Ketten, die die Zugfestigkeit deutlich erhöhen können. Des Weiteren entstehen die Filamente mit einem hohen Grad an Orientierung, wodurch eben die Festigkeit erhöht wird.

Elektrospinnen bezeichnet ein Spinnverfahren, bei dem durch Anlegen einer elektrischen Spannung zwischen der Spinndüse und einer Sammelstelle das Filament aus der Spinndüse gesammelt wird. Das Elektrospinnen benötigt keine Koagulationschemie und/oder hohe Temperaturen, um feste Filamente bereitzustellen.

Als besonders geeignet zur Bereitstellung der Filamente für den erfindungsgemäßen Kontext hat sich das Nassspinnen erwiesen. Beim Nassspinnen werden die Inhaltsstoffe, vorzugsweise mit bestimmten Werten hinsichtlich ihrer Anteile und/oder Konzentration, vermengt und/oder gelöst, sodass eine gewünschte Viskosität erzielt wird. Hierbei sind vorzugsweise die Inhaltsstoffe als Ausgangstoffe zu verstehen, die beispielsweise in einem Tank befüllt werden können. Diese werden dann unter Wärme und/oder Druck durch die Spinndüse befördert zur Bereitstellung der Filamente. Die Filamente werden in ein Koagulationsbad extrudiert. Das Koagulationsbad beinhaltet eine Flüssigkeit umfassend ein Abbindemittel (beispielsweise Calciumlactat). Verbindungen umfassend Calcium haben sich als besonders gute Abbindemittel herausgestellt, um insbesondere die Alginathülle umfassend vernetztes Alginat als Ummantelungsstoff zu bilden. So weist das bereitgestellte Filament vorteilhaft bereits in dem Koagulationsbad eine geeignete Festigkeit und Stabilität auf. Die Filamente können anschließend besonders einfach weiteren Verarbeitungsschritten unterzogen werden, wie beispielsweise eine Lagerung auf einer Rolle und/oder dem Verstrecken der Filamente. Bevorzugte Verfahrensschritte zur Durchführung des Nassspinnens sind die Erhitzung der Inhaltsstoffe in Form einer Mischung und/oder Lösung in einem geeigneten Tank und/oder Gefäß, Weiterleitung der Mischung und/oder der Lösung in die Spinndüse und/oder Einleitung der Filamente in ein entsprechendes Koagulationsbad.

Das Koagulationsbad bezeichnet ein Gefäß oder einen Behälter, in dem sich ein Koagulationsmittel befindet. Das Koagulationsmittel umfasst ein Mittel, um Proteine zu gerinnen und/oder zu vernetzen. Im erfindungsgemäßen Kontext haben sich Koagulationsmittel umfassend Calcium als besonders vorteilhaft erwiesen.

Insbesondere ist es bevorzugt, dass die Spinndüse sich direkt im Koagulationsbad befindet, um eine besonders schnelle und effektive, geeignete Erhärtung der Filamente zu erlangen, die sich insbesondere durch das Vernetzen des Alginats ergibt.

Insbesondere können die Geometrie, die mechanischen und/oder physikalischen Eigenschaften der Filamente über können über Prozessparameter des Nassspinnens eingestellt werden. Mögliche Prozessparameter können ausgewählt sein aus einer Gruppe umfassend eine Fördergeschwindigkeit des Fördermittels, der Druck, die Abzugsgeschwindigkeit, die Temperatur des Tanks, in dem die Ausgangsstoffe befüllt werden, die Temperatur während der Förderung zur Spinndüse, die Temperatur der Spinndüse, der Aufbau und/oder die Geometrie der Spinndüse und/oder die Temperatur im Koagulationsbad.

So kann der Druck ca. 2 - 100 bar, die Abzugsgeschwindigkeit ca. 2 - 200 m/min, die Temperatur des Tanks ca. 0°C - 80°C, die Temperatur während der Förderung zur Spinndüse ca. 20°C - 80°C und/oder die Temperatur des Koagulationsbades ca. 0°C - 80°C betragen.

Darüber hinaus ist insbesondere im Hinblick auf ein Spinnverfahren, insbesondere beim Nassspinnverfahren, der Einsatz von Methylcellulose besonders vorteilhaft, da es durch die Methylcellulose verhindert wird, dass insbesondere Fettfilamte breiartig aus der Spinndüse gelangen, sondern filamentförmig austreten können.

Ein Extrusionsverfahren bezeichnet ein Verfahren, bei dem insbesondere verformbare bis dickflüssige Massen unter Druck kontinuierlich aus einer formgebenden Öffnung herausgepresst werden. Die geformte Masse wird als Extrudat bezeichnet und härtet in der Regel beim Austritt aus der Öffnung durch Abkühlung, Erhitzung und/oder chemische Reaktion aus. Durch Extrusionsverfahren können vorteilhaft Filamente umfassend vielseitige Profile mit etlichen, insbesondere komplexen, Querschnitten in beliebiger Länge erstellt werden. Spinnverfahren stellen eine bestimmte Art von Extrusionsverfahren. Weitere Extrusionsverfahren sind für die Bereitstellung der Filamente bevorzugt einzusetzen, die es ermöglichen, dass mehrkomponentige Filamente umfassend einen Ummantelungsstoff und einen Füllstoff gebildet werden.

Bevorzugt entsteht die Struktur der Filamente während der Bereitstellung der Filamente in Schritt a). In einer Ausführungsform werden die Filamente umfassend den Ummantelungsstoff und den Füllstoff durch ein Spinnverfahren und/oder Extrusionsverfahren bereitgestellt. Vorzugsweise erfolgt die Bereitstellung der Filamente durch ein Spinnverfahren und/oder Extrusionsverfahren im Rahmen einer Sphärifikation. Im erfindungsgemäßen Kontext bildet dabei Alginat als reaktives Biopolymer im Koagulationsbad durch eine Reaktion mit zweiwertigen Metallionen, beispielsweise Calciumionen Ca2+, eine Außenhülle, um den Ummantelungsstoff als vernetztes Alginat bereitzustellen. Vorteilhafterweise kann ein Ummantelungsstoff gebildet werden, der einen niedrigviskosen Kern, d. h. einen niedrigviskosen Füllstoff, umschließt, wobei der Füllstoff Proteine, Fette, Farbstoffe und/oder Aromen aufweisen kann. Im Gegensatz zu Fleischersatzprodukten oder Verfahren des Standes der Technik liegt insbesondere der Füllstoff als eine Emulsion innerhalb des Ummantelungsstoffes vor, was sich durch bevorzugte Verfahrensschritte, insbesondere durch die Bereitstellung der Filamente ergibt und im Fleischersatzprodukt selbst auch feststellen lässt.

In einer weiteren bevorzugten Ausführungsform ist das Verfahren dadurch gekennzeichnet, dass in Verfahrensschritt a-1) ein Fördermittel eine Spinmasse umfassend Wasser, Alginat und Methylcellulose, und zusätzlich Proteine und/oder Fette, zu einer Spinndüse befördert und/oder zwischen dem Fördermittel und der Spinndüse eine Temperatur zwischen 20°C und 80°C vorliegt.

In einer weiteren bevorzugten Ausführungsform ist das Verfahren dadurch gekennzeichnet, dass in Verfahrensschritt a-1) ein Fördermittel eine Spinnmasse umfassend Wasser, Alginat und Methylcellulose, und zusätzlich Proteine und/oder Fette, zu einer Spinndüse befördert und/oder zwischen dem Fördermittel und der Spinndüse eine Temperatur zwischen 20°C und 180°C, zum Beispiel zwischen 20°C und 80°C, vorliegt.

Vorteilhafterweise kann durch das Fördermittel die Spinmasse effizient zur Spinndüse transportiert werden. Der angegebene Temperaturbereich zwischen dem Fördermittel und der Spinndüse ist dahingehend vorteilhaft, dass bereits eine Vernetzung der Proteine ermöglicht wird.

Die Spinnmasse umfasst die Gesamtheit der Ausgangsstoffe, die aus der Spinndüse zur Ausbildung der Filamente bereitgestellt werden. Die Ausgangsstoffe umfassen bevorzugt Wasser, Alginat, Methylcellulose und zusätzlich Proteine und/oder Fette. Insbesondere kann es bevorzugt zu sein, dass die Spinndüse bereits in dem Koagulationsbad vorliegt, um direkt nach dem Austritt aus der Spinndüse eine Vernetzung des Alginats zu ermöglichen, sodass eine unmittelbare Kontaktierung zwischen dem herausgetrennten Filament und dem Calcium resultiert.

In weiteren bevorzugten Ausführungsformen kann Alginat als Kollagenersatz in der Spinndüse und/oder vor der Spinndüse vernetzt werden.

Die Spinndüse bezeichnet eine Komponente einer Vorrichtung oder einer Anlage, die das Spinnverfahren ausüben kann. Die Spinndüse weist mindestens eine Öffnung, vorzugsweise mehrere Öffnungen auf. Durch das Vorliegen mehrere Öffnungen können vorteilhafterweise mehrere Filamente gebildet werden. Dabei ist es bevorzugt, dass aus einer Spinndüse mit mehreren Öffnungen die Filamente sich in ihren Inhaltsstoffen und der Struktur im Wesentlichen gleichen. So kann prozesseffizient eine Vielzahl von gleichartigen Filamenten bereitgestellt werden.

Ein Fördermittel bezeichnet eine Komponente der Vorrichtung zur Ausübung des Spinnverfahrens, um die Spinnmasse in Richtung der Spinndüse zu transportieren. Das Fördermittel wird bevorzugt ausgewählt aus einer Gruppe umfassend eine Pumpe und/oder Druckluft. Druckluft bezeichnet hierbei Luft, die komprimiert wird und dem Zweck dient, die Spinnmasse in Richtung der Spinndüse zu befördern.

In einer weiteren bevorzugten Ausführungsform ist das Verfahren dadurch gekennzeichnet, dass die Filamente in Verfahrensschritt a-1) nach einem Austritt aus einer Spinndüse mit einer Lösung umfassend Calcium, Calciumlactat und/oder Alginat kontaktiert werden, wobei bevorzugt die Lösung eine Temperatur zwischen ca. 0°C und ca. 80°C aufweist.

Vorteilhafterweise führt die Kontaktierung zwischen dem aus der Spinndüse herausgetretenen Filament und der Lösung umfassend Calcium, Calciumlactat und/oder Alginat zu einer besonders guten Vernetzung des Alginats. Vorzugsweise bildet das vernetzte Alginat eine Außenhülle des Filaments. Das vernetzte Alginat hat sich auch dahingehend als vorteilhaft erwiesen, dass damit besonders gut die Filamente untereinander in weiteren Verfahrensschritten miteinander verbunden werden können.

Des Weiteren hat sich der angegebene Temperaturbereich dahingehend als vorteilhaft erwiesen, dass eine besonders schnelle Reaktion zur Ausbildung von vernetztem Alginat erreicht werden kann.

Bevorzugt kann das vernetzte Alginat auch in der Spinndüse und/oder vor dem Eintritt in die Spinndüse gebildet werden, um die Außenhülle des Filaments bereitzustellen. Es kann auch bevorzugt sein, dass ein Abbindemittel wie Calciumlactat als Ausgangsstoff eingesetzt und daraufhin das Extrudat nach dem Austritt einer Düse mit einer gesprühten und/oder flüssigen Lösung kontaktiert wird. Auf der Oberfläche des Filaments bildet sich ein AIginatfilm, der durch das Calcium im Proteinkern gebunden wird. Die Filamente können ebenfalls abgezogen und verstreckt werden. Die beschriebene Variante mit der Bildung des vernetzten Alginats in und/oder vor dem Eintritt in die Düse kann auch im Rahmen eines Spinnverfahrens, d. h. bei einer Spinndüse, auftreten.

Darüber hinaus ist es von sehr großem Vorteil, dass zusätzliche Verfahrensschritte, wie beispielsweise das Einfrieren der Lösung und/oder des Filaments, nicht benötigt werden, um die Proteine entlang einer Längsachse des Filaments auszurichten. Stattdessen gelingt es dem erfindungsgemäßen Verfahren, die Proteine direkt nach einem Austritt aus der Spinndüse und/oder der Extrusion entlang einer Längsachse des Filaments auszurichten. Dies kann beispielsweise durch eine geeignete Strömung im Koagulationsbad und/oder eine erhöhte Abzugsgeschwindigkeit erfolgen. Die mechanischen Eigenschaften durch Längsrichtung der Proteine steigen deutlich an. Somit kann das anisotrope Materialverhalten von Fleisch auch bei sehr feinen Fasern (Querschnitt< ca. 200 Mikrometer) zur Nachahmung von Fleischfasern besonders gut imitiert werden. Durch die Vernetzung der Proteine können die Filamente besonders hohe Festigkeiten erlangen und gut verstreckt werden. Die Verstreckung ist insbesondere dahingehend vorteilhaft, die Makromoleküle der Proteine zur orientieren.

Das Alginat reagiert mit dem Abbindemittel, vorzugsweise dem Calciumlactat, aus dem Koagulationsbad. Die Reaktion findet an der Oberfläche der Filaments statt, sobald die Spinnmasse aus der Spinndüse tritt. Vorteilhafterweise können über ca. 95% Wasser durch das Alginat gebunden werden. Darüber hinaus können Aroma-, Farb- und/oder weitere funktionelle Stoffe gut im Alginat gebunden werden.

In einer weiteren bevorzugten Ausführungsform ist das Verfahren dadurch gekennzeichnet, dass die Filamente in Verfahrensschritt a-1) aus einer Spinndüse abgezogen, getrocknet und/oder verstreckt und anschließend gelagert werden, wobei bevorzugt ein Lagern auf einer Rolle erfolgt, bevor die Filamente in Verfahrensschritt b) eingesetzt werden.

Das Abziehen des Filaments aus einer Spinndüse bezeichnet das Austreten und Verfestigen des Filaments aus der Spinndüse in dem Koagulationsbad.

In weiteren bevorzugten Ausführungsformen werden die Filamente nach dem Abziehen getrocknet, gewaschen und/oder kompaktiert. Das Trocknen, Waschen und/oder Kompaktieren kann bevorzugt dadurch erfolgen, dass die Filamente über Transportrollen geführt und von einem Wickler abgezogen werden. Ebenfalls kann es bevorzugt sein, das Trocknen, Waschen und/oder Kompaktieren so durchzuführen, indem die Filamente auf einem Transportband abgelegt und mithilfe des Transportbandes durch einen oder mehrere der genannten Schritte geführt werden.

Das Waschen erfolgt bevorzugt nach der Kontaktierung der Filamente mit der Koagulationsflüssigkeit, die sich bevorzugt innerhalb des Koagulationsbades befindet. Die Oberfläche der Filamente ist am Ausgang des Koagulationsbades bevorzugt mit Calciumlactat und/oder Wasser benetzt. Daher können bevorzugt hinter das Koagulationsbad weitere Waschbäder geschaltet werden. Die Filamente können im Anschluss an das Koagulationsbad durch diese Waschbäder gezogen werden. In diesen Waschbädern (oder in einem Waschbad) erfolgt das Waschen (die sogenannte Waschung), sodass vorteilhafterweise Reste der Koagulationsflüssigkeit abgewaschen werden. Als Waschmittel wird bevorzugt Wasser genutzt.

Das Trocknen des Filaments bezeichnet ein Verfahrensschritt, bei dem das Filament mit Luft und/oder über Mikrowellen und/oder Strahlung (beispielsweise Infrarotstrahlung) und/oder beheizte Oberflächen (beispielsweise Galetten) bei einer bestimmten Temperatur und/oder innerhalb einer bestimmten Zeitspanne kontaktiert wird, um die Restfeuchte, die durch die Kontaktierung des Filaments mit einer Flüssigkeit umfassend Calcium und/oder Calciumlactat verbleibt, zu verdampfen. Das Trocknen kann bevorzugt auch durch ein mechanisches Herauspressen von Flüssigkeit erfolgen. Hierzu können die Filamente bspw. zusätzlich zu den oben beschriebenen Trocknungsverfahren zwischen mehreren kontinuierlich laufenden, bevorzugt perforierten, Bändern mit einem gewissen Anpressdruck zueinander geführt werden.

Das Kompaktieren der Filamente erfolgt vorzugsweise während oder nach dem Trocknen der Filamente. Beim Kompaktieren werden mehrere Filamente zu einem Filamentbündel kompaktiert, d. h. insbesondere verdichtet bzw. gebündelt. Hierbei kann insbesondere eine Mehrzahl von im Wesentlichen parallel abgezogenen Filamenten zu Filamentbündeln kompaktiert werden. Vorzugsweise werden zum Kompaktieren die bevorzugt im Wesentlichen parallellaufenden Filamente bspw. über konische Walzen geführt, zwischen mehreren, bevorzugt perforierten, Förderbändern transportiert und/oder verdrillt (gegeneinander verwinden und/oder das schraubenförmige Umeinanderwickeln von Filamenten). Die unterschiedlichen Schritte (Führung über konische Walzen, Transport zwischen mehreren Förderbändern, verdrillen) können bevorzugt auch miteinander kombiniert werden. Vorteilhafterweise gelingt es durch das Kompaktieren direkt Bündel mit ca. 50 - 10 000 Filamenten, beispielsweise auch 100 - 5000 oder 500 - 2000 Filamenten, im Querschnitt auf Spulen aufzuwickeln.

Beim Verstrecken des Filaments wird vorzugsweise das bereitgestellte Filament verlängert. Dies kann beispielsweise durch ein Abziehen aus der Spinndüse mit erhöhter Geschwindigkeit erfolgen. Die Verstreckung kann die Faserfeinheit der Filamente beeinflussen. Insbesondere können die Proteine sich optimaler entlang einer Längsachse der Filamente orientieren.

Das Lagern der Filamente bezeichnet vorzugsweise ein Vorraten der bereitgestellten Filamente. Insbesondere werden dabei die Filamente aufbewahrt, da sie zu einem späteren Zeitpunkt wieder benötigt werden, beispielsweise für weitere Verfahrensschritte zur Herstellung des Fleischersatzproduktes.

Vorzugsweise kann das Lagern auf einer Rolle erfolgen, bevor die Filamente in Verfahrensschritt b) eingesetzt werden. Vorteilhafterweise können durch das Lagern auf der Rolle die Filamente besonders einfach ausgetauscht werden, wenn beispielsweise in Verfahrensschritt b) andere Filamentanordnungen notwendig sind. Es kann viele Beispiele zur Notwendigkeit einer Änderung der Filamentanordnung geben. So ist dies wichtig, wenn während der Herstellung Probleme auftreten, die einen Wechsel der Filamente, und damit einen Wechsel der Rollen, erfordern. Weiterhin kann dies wichtig sein, wenn während der Herstellung andere Anforderungen für die Bildung einer Fleischnachahmungskomponente und/oder das Fleischersatzprodukt geäußert werden. Das Lagern auf Rollen hat damit besonders prozesseffiziente Vorteile für die Herstellung des Fleischersatzproduktes. Darüber hinaus ermöglicht das Lagern der Filamente den Transport, die direkte Weiterverarbeitung oder weitere vorteilhafte Veränderungsprozesse (beispielsweise Reifeprozesse und/oder Fermentationsprozesse).

Im erfindungsgemäßen Kontext bezeichnet eine Rolle eine Vorrichtung, auf die das Filament gewickelt werden kann. Daher können die Begriffe "Rolle" und "Wickler" synonym verwendet werden. Insbesondere kann durch eine Drehung der Rolle die Abziehgeschwindigkeit des Filaments reguliert werden. So kann beispielsweise das Filament aus der Spinndüse in das Koagulationsbad und dann auf die Rolle befördert werden. Auf der Rolle können unterschiedliche Wicklungen, wie z. B. eine Kreuzwicklung, die Weiterverarbeitungsfähigkeit verbessern.

In einer weiteren bevorzugten Ausführungsform ist das Verfahren dadurch gekennzeichnet, dass die Filamente für die Filamentanordnung in vordefinierten Regionen durch eine Führung, vorzugsweise ein Gitter, zur Positionierung von mehreren Filamenten mit unterschiedlichen Inhaltsstoffen für Fleischnachahmungskomponenten gezogen und miteinander verpresst werden.

Eine Führung meint im erfindungsgemäßen Kontext insbesondere eine oder mehrere Komponenten, die eine Richtungsvorgabe für ein Filament ermöglichen. Insbesondere gibt die Führung vordefinierte Regionen für die Filamentanordnung vor. Filamente mit einer im Wesentlichen gleichen chemischen Zusammensetzung können dadurch Fleischnachahmungskomponenten bilden, deren Positionierung durch die Führung bestimmt werden kann. Ferner ermöglicht die Führung vorzugsweise eine räumliche Annäherung von Filamenten.

Die Führung kann als eine Komponente vorliegen oder eine Mehrzahl von Komponenten aufweisen. So kann es bevorzugt sein, dass die Führung eine oder mehrere Rollen umfasst, die die eine zueinanderführende räumliche Annäherung von Filamenten ermöglichen. Besonders bevorzugt umfasst eine Führung ein Gitter, durch deren Öffnungen Filamente geführt werden, sodass vordefinierten Regionen für die Filamentanordnung bereitgestellt werden können.

In einer weiteren bevorzugten Ausführungsform ist das Verfahren dadurch gekennzeichnet, dass die Filamente für die Filamentanordnung in vordefinierten Regionen durch ein Gitter zur Positionierung von mehreren Filamenten mit unterschiedlichen Inhaltsstoffe für Fleischnachahmungskomponenten gezogen und miteinander verpresst werden. Insbesondere werden die Filamente gebündelt, um die Filamentanordnung und daraufhin das Fleischersatzprodukt zu bilden.

Vorteilhafterweise können die Filamente mithilfe eines Ziehens durch ein Gitter diese mit höchster Präzision in eine derartige Position gebracht werden, um schließlich für das Fleischersatzprodukt in verschiedenen Regionen Fleischnachahmungskomponenten zu bilden. Dabei werden bevorzugt mehrere Filamente durch eine Öffnung des Gitter mit im Wesentlichen gleichen Inhaltsstoffen gezogen, um eine Fleischnachahmungskomponente zu bilden, beispielsweise Muskeln. In einer weiteren Öffnung des Gitters werden Filamente gezogen, beispielsweise Fettfilamente, um in einer weiteren bestimmten Region des Fleischersatzproduktes eine weitere Fleischnachahmungskomponente zu bilden, beispielsweise Fett. Vorzugsweise weist das Gitter mindestens zwei Öffnungen auf, um zwei Regionen des Fleischersatzproduktes zu bilden, in denen entsprechend zwei verschiedene Fleischnachahmungskomponenten gebildet werden.

In weiteren bevorzugten Ausführungsformen kann das Gitter mehr als zwei Öffnungen aufweisen, beispielsweise 3, 4, 5, 6, 7, 8, 9, 10, 20, 50, 100, 200, 500, 1 000, 2 000, 5 000, 10 000, 100 000. Vorteilhafterweise können somit eine Vielzahl von Fleischnachahmungskomponenten ermöglicht werden, sodass ein besonders realistisches Abbild eines Fleischersatzproduktes gebildet wird.

Dabei müssen nicht zwangsläufig unterschiedliche Filamentsorten durch jede Öffnung des Gitters gezogen werden. So kann es beispielsweise sein, dass ein Gitter 7 Öffnungen aufweist und lediglich zwei Filamentsorten hindurchgezogen werden, z. B. Proteinfilamente und Fettfilamente. Insbesondere kann es dann sein, dass die Fettfilamente durch eine Öffnung des Gitters hindurchgezogen werden und durch die restlichen 6 Öffnungen Proteinfilamente. So kann eine Region für Fett für das Fleischersatzprodukt bereitgestellt werden, die von Muskeln umgeben ist. Ebenfalls kann eine Region für Fett an einem Rand des Fleischersatzproduktes bereitgestellt vorliegen. Dieses Beispiel dient der näheren Illustration des erfindungsgemäßen Verfahrens und ist keineswegs einschränkend aufzufassen. Es kann auch bevorzugt sein, mehrere Fettregionen zu bilden, die von Muskeln umgeben sind. Ebenfalls kann es bevorzugt sein, dass Haut und Knorpel als Fleischnachahmungskomponenten ermöglicht werden.

Durch ein Gitter wird vorteilhaft eine Programmierfähigkeit des Fleischersatzproduktes ermöglicht, um die gezielte Position von Filamentsorten für das Fleischersatzprodukt bereitzustellen.

Im Sinne der Erfindung bezeichnet ein Gitter eine Komponente, die Öffnungen aufweist, wobei durch je eine Öffnung eine Filamentsorte durchgezogen werden kann. Dabei wird Tribologie über reibungsmindernde Verfahren, wie Ultraschalltechnik oder behandelte Oberflächen optimiert. Die Option, eine Filamentsorte durch eine Öffnung durchziehen zu können, kann durch eine geeignete, entsprechend eingestellte Mechanik resultieren. Beispielsweise können die bevorzugten Rollen, auf denen die Filamente gelagert werden, entsprechend positioniert und ein Strang des Filament in die entsprechenden Öffnungen gebracht werden.

Somit wirkt das Gitter in gewisser Weise wie eine Schablone, die durch ihre Öffnungen bestimmte Filamentsorten einziehen kann und somit die vordefinierten Regionen für die Fleischnachahmungskomponenten bereitgestellt werden. Vorteilhafterweise wird somit die Programmierfähigkeit des erfindungsgemäßen Verfahrens begünstigt.

In weiteren bevorzugten Ausführungsformen können die Filamentsorten durch mehrere Gitter gezogen werden, wobei die Filamentsorten durch entsprechende Öffnungen gezogen werden. Dabei kann es bevorzugt sein, dass die Filamente und/oder Filamentbündel im weiteren Verlauf des Durchgangs durch die Öffnungen der Gitter sich anschmiegen und/oder verjüngen und daraufhin miteinander verbunden werden. Bei der Verwendung mehrerer Gitter ist es bevorzugt, die entsprechenden Öffnungen der Filamentsorten hinsichtlich einer gleichmäßigen Positionierung anzuordnen. Dabei können mehrere Gitter auch hintereinander angeordnet werden. Vorteilhaft gelingt hierbei eine besonders genaue und feine Positionierung der Fleischnachahmungskomponenten.

In weiteren bevorzugten Ausführungsformen werden mehrere Gitter hintereinander derart positioniert, dass die Filamente in Öffnungen der Gitter überführt bzw. eingeführt werden können, wobei die Öffnungen der Gitter, durch die die Filamente eingeführt werden sollen, in unterschiedlichen Höhen positioniert sind. Dies führt dazu, dass in der Filamentanordnung und/oder nach einem Schneiden der Filamentanordnung zur Bereitstellung des Fleischersatzproduktes eine oder mehrere Filamente vertikal verschränkt vorliegen, bevorzugt eine Verschiebung in vertikaler und/oder laterale Richtung aufweisen. Insbesondere kann ein Anfangsbereich eines Filaments eine andere Höhe im Fleischersatzprodukt haben als ein Endbereich des Filaments im Fleischersatzprodukt. Damit sind die Filamente im hergestellten Fleischersatzprodukt nicht darauf beschränkt, entlang einer Ebene angeordnet zu sein. Vielmehr resultiert die Möglichkeit, insbesondere durch die bevorzugte Anordnung mehrerer Gitter sowie der Einführung der Filamente in Öffnungen der Gitter, die eine unterschiedliche Höhe aufweisen, dass die Filamente eine vertikale Verschiebung (Verschiebung in z-Richtung) aufweisen können. Insbesondere können Filamente umeinander umschlungen vorliegen und/oder verkreuzt sein. Vorteilhaft erhöht dies das Realitätsbild des Fleischersatzproduktes. Daher betrifft in weiteren Ausführungsformen die Erfindung gemäß dem zweiten Aspekt ein Fleischersatzprodukt dadurch gekennzeichnet, dass die Filamente des Fleischersatzproduktes eine Verschiebung in vertikaler Richtung, eine Umschlingung und/oder Verkreuzung aufweisen innerhalb des Fleischersatzproduktes. Vorteilhaft wird hierdurch die Realitätsnachahmung von Fleisch, insbesondere von Fleischkomponenten, erheblich verbessert, da Fleischkomponenten wie z. B. Sehnen, Adern, Knorpel, Muskelstränge etc. nicht geradlinig entlang einer Ebene verlaufen, sondern meistens auch eine Erstreckung in vertikaler Richtung aufweisen, umschlungen und/oder verkreuzt sein können.

Darüber hinaus können auch bevorzugt weitere Komponenten, wie vorwiegend zweidimensionale (beispielsweise Folien oder flache Gewebe) oder dreidimensionale Strukturen (wie Schäume und/oder Vliesstoffe und/oder Festkörper in unterschiedlichen Geometrien) gezielt zugeführt werden.

Das Verpressen der Filamente meint bevorzugt, dass die Filamente oder Filamentbündel unter einem Druck miteinander verbunden werden, sodass sie nicht mehr auseinanderfallen.

In einer weiteren bevorzugten Ausführungsform ist das Verfahren dadurch gekennzeichnet, dass der Verfahrensschritt b) durch ein Pultrusionsverfahren durchgeführt wird.

Im Sinne der Erfindung bezeichnet ein Pultrusionsverfahren bevorzugt ein Verfahren, bei dem kontinuierlich Filamente hergestellt werden können. Insbesondere umfasst ein Pultrusionsverfahren Schritte, bei dem Filamente abgezogen werden und an- bzw. zueinander geführt werden. Mit anderen Worten beschrieben, wird es mithilfe eines Pultrusionsverfahrens ermöglicht, Filamente abzuziehen und/oder zu fördern und zu bündeln, um eine hinsichtlich der Dimensionierung größere Struktur bereitstellen zu können. Im erfindungsgemäßen Kontext hat sich ein Pultrusionsverfahren als besonders vorteilhaft erwiesen, um eine Filamentanordnung bereitzustellen.

Ein Pultrusionsverfahren, auch Strangziehverfahren genannt, bietet vorteilhafterweise ein sehr hohes Maß an Gestaltungsfreiheit, insbesondere für das Fleischersatzprodukt. Der Prozess ermöglicht die Fertigung von Profilen mit individuellen Eigenschaften und Geometrien. Maßgeblich bei der Pultrusion sind drei Faktoren, die im Verfahren gezielt bestimmt werden können, nämlich die gewünschte Faserverstärkung, das Bindersystem und das Werkzeug, das den Profilquerschnitt definiert. Mit der bewussten Auswahl dieser Faktoren entstehen mit dem Pultrusionsverfahren Profile mit individuellen Eigenschaften und Querschnitten für verschiedene Anwendungen, insbesondere für das Fleischersatzprodukt.

Eine Pulstrusionsvorrichtung oder Pultrusionsanlage zur Durchführung der Pultrusion kann ein Filamentregal, eine Filamentführung und eine Ziehkomponente aufweisen. Ein Filamentregal kann durch eine Vielzahl von Rollen gebildet werden, die gewickelte Filamente aufweisen. Die Filamente können vorzugsweise durch eine Ziehkomponente und einer Filamentführung durch einen geeigneten mechanischen Aufbau durch mehrere Vorformstationen gezogen werden, sodass sie an die gewünschte Profilform herangeführt werden. Vorteilhafterweise können die Filamente durch den Einsatz eines Pultrusionsverfahrens sehr gezielt angeordnet und miteinander verbunden werden. Der besondere Vorteil dieser Produktionstechnologie ist die Möglichkeit, die Geschmacks- und/oder Nährwertzusammensetzung jedes Filaments zueinander angeordnet werden können. Der bevorzugte Einsatz eines Gitters kann insbesondere eine Komponente beim Pultrusionsverfahren sein.

Vorteilhafterweise ist das Pultrusionsverfahren ein kontinuierliches Verfahren, d. h. ein Verfahren, welches ohne Unterbrechungen durchgeführt werden kann. Vorteilhaft resultiert hierdurch eine enorme Prozesseffizienz, da Warte- und/oder Rüstzeiten minimiert werden sowie eine Massenproduktion von Fleischersatzprodukten begünstigt wird. Insbesondere kann vorteilhaft innerhalb einer erheblich kürzeren Zeit eine höhere Menge an Fleischersatzprodukten hergestellt werden, was die besondere Effektivität des bevorzugten Verfahrens verdeutlicht.

Daher umfasst ein Verfahren zur Herstellung eines Fleischersatzproduktes beispielsweise auch folgende Verfahrensschritte:
a) Bereitstellung einer Mehrzahl von mehrkomponentigen Filamenten umfassend Wasser, und zusätzlich Proteine und/oder Fette, wobei jeweils jedes Filament ein Ummantelungsstoff und ein Füllstoff umfasst, wobei der Ummantelungsstoff den Füllstoff umhüllt, wobei die Filamente umfassend den Ummantelungsstoff und den Füllstoff während eines Spinnverfahrens und/oder Extrusionsverfahrens gebildet werden, insbesondere durch eine Kontaktierung eines zweiwertigen Metallions mit Alginat,
b) Erstellung einer Filamentanordnung mit vordefinierten Regionen für mindestens zwei Fleischnachahmungskomponenten umfassend der in Verfahrensschritt a) bereitgestellten Filamente, wobei die Filamente miteinander verbunden und die Filamentanordnung als Fleischersatzprodukt geformt wird unter Einsatz eines Pultrusionsverfahrens.

In einer weiteren bevorzugten Ausführungsform kann der Verfahrensschritt b) durch ein Legeverfahren durchgeführt wird. Vorzugsweise werden die Filamente bei einem Legeverfahren unter Anwendung von Druck und/oder Temperatur und/oder dem Einsatz eines Bindemittels entlang eines vorgegebenen Pfads abgelegt. Dabei werden ebenfalls vorzugsweise die Filamentsorten derart abgelegt, dass vordefinierte Regionen zur Nachahmung von Fleischkomponenten bereitgestellt werden. Durch einen entsprechenden Druck- und/oder Temperatureinfluss werden die Filamente miteinander verbunden. Das Ablegen an sich kann insbesondere robotergeführt sein, d. h. automatisiert und programmiert erfolgen. Vorteilhafterweise können auch durch Legeverfahren die Fleischersatzprodukte effizient und reproduzierbar hergestellt werden.

In weiteren bevorzugten Ausführungsformen kann der Verfahrensschritt b) manuell erfolgen. Eine manuelle Ausführung meint insbesondere, dass die Filamente auch gezielt von einem Nutzer per Hand angeordnet werden können. Insbesondere können dabei unterschiedliche Filamentsorten in mindestens zwei vordefinierten Regionen verpresst und miteinander verbunden werden. Es kann ebenfalls bevorzugt sein, dass eine Vielzahl von Menschen die Fleischersatzprodukte herstellen und dabei die gleichen Filamentsorten in denselben vordefinierten Regionen für mehrere Fleischnachahmungskomponenten miteinander verbinden. Auch hierdurch kann vorteilhaft eine Massenproduktion von Fleischersatzprodukten durchgeführt werden.

In einer weiteren bevorzugten Ausführungsform ist das Verfahren dadurch gekennzeichnet, dass in Verfahrensschritt b) die Filamentanordnung im Wesentlichen quer zu einer Längsachse geschnitten wird, wobei bevorzugt die Anordnung der Filamente nach einem Schnitt eine Dicke aufweist zwischen 0,01 cm und 100 cm, bevorzugt von 2,5 cm. Die Lage des Schnittes kann in einer weiteren Achse gekippt werden, um Anschnitte schräg zur Faser zu ermöglichen. Dies kann beispielsweise bei der Nachahmung von Fischersatzprodukten notwendig sein.

Durch das Schneiden bzw. den Schnitt im Wesentlichen quer zu einer Längsachse können vorteilhafterweise Scheiben mit gewünschten Dicken und/oder Längen bereitgestellt werden. Somit kann durch den Schnitt auch die Form des Fleischersatzproduktes reguliert werden. Dabei ist es bevorzugt, dass der Schnitt durch einen oder mehrere Schneidewerkzeuge erfolgt. Insbesondere ist es bevorzugt, dass der Schnitt dann ausgeführt wird, wenn die Filamente oder Filamentbündel miteinander verbunden sind, sodass durch den Schnitt die Ausmaße des Fleischersatzproduktes bestimmt werden kann. Dabei kann der Schnitt insbesondere quer zur Produktionsrichtung des Fleischersatzproduktes durchgeführt werden.

So kann es bevorzugt sein, dass Filamentbündel mit ca. 5 000 - 10 000 Filamenten pro Bündel in einer Form abgelegt und daraufhin ca. 100 - 1000 solcher Filamentbündel zu einem Fleischnachahmungsblock mit bestimmten Ausmaßen kombiniert werden. Beispielsweise kann ein Fleischnachahmungsblock Dimensionen von ca. 20 x 10 x 10 cm³ aufweisen. Anschließend können dann aus einem Fleischnachahmungsblock mehrere Stücke mit einer bestimmten Dicke quer zur Längsachse geschnitten werden, die jeweils eine Dicke von ca. 2,5 cm aufweisen. Auch andere Ausmaße können bevorzugt sein, die davon abhängen, welches Fleischprodukt imitiert werden soll, da beispielsweise ein Steak andere Dimensionen aufweist als eine Schinkenscheibe oder ein Burgerpattie. Vorteilhaft kann eine Vielzahl von Fleischersatzprodukten besonders gut nachgebildet werden.

Das Schneiden oder der Schnitt bezeichnet eine Maßnahme, bei dem durch einen oder mehrere Schneidewerkzeuge durch einen oder mehrere Schnitte eine Zerteilung und/oder eine Zerlegung durchgeführt werden kann, sodass das Fleischersatzprodukt und/oder Komponenten für Fleischersatzprodukte in gewünschten Maßen bereitgestellt werden.

Im Gegensatz zu Lehren des Standes der Technik, wie beispielsweise der WO 2021/191906A1, wird die Filamentanordnung bevorzugt nach der Bündelung und damit nach der Bereitstellung eines gebündelten Stückes geschnitten. Damit werden insbesondere nicht die Filamente als solche geschnitten, sondern vorzugsweise, nachdem die Filamente zu einer Filamentanordnung gebündelt worden sind. Vorteilhaft wird hierdurch eine höhere Designfreiheit des Fleischersatzproduktes erzielt, sodass im Rahmen des bevorzugten Herstellungsverfahrens die geometrische Ausgestaltung des Fleischersatzproduktes optimal reguliert werden kann.

In einer weiteren bevorzugten Ausführungsform ist Verfahren dadurch gekennzeichnet, dass in Verfahrensschritt b) die Filamente mit einem essbaren Binder kontaktiert werden, wobei die essbaren Binder ausgewählt sind aus einer Gruppe umfassend Alginat, Albumin, bevorzugt Ei-Albumin, Soja-Albumin und/oder Weizenalbumin, und/oder Getreidegluten, bevorzugt Weizengluten und/oder Roggengluten, besonders bevorzugt ein Enzym zur Quervernetzung von Proteinen, ganz besonders bevorzugt Transglutaminase.

Die vorstehend genannten essbaren Binder haben sich als besonders kostengünstig und prozesseffizient in der Lebensmitteltechnologie erwiesen und eignen sich ebenfalls gut für eine Massenherstellung. Ebenso stammen diese essbaren Binder zum Großteil nicht aus tierischen Produkten, sodass das Fleischersatzprodukt auch für Vegetarier und/oder Veganer hergestellt werden können.

Ein essbarer Binder bezeichnet ein für Menschen essbares, insbesondere verdaubares, Bindemittel. Der essbare Binder dient insbesondere dazu, die Filamente miteinander zu verbinden. Dabei ist es bevorzugt, dass der essbare Binder beim Zusammenführen der-Filamentanordnung mit diesem kontaktiert wird. Dies kann beispielsweise während der Pultrusion erfolgen. Weiterhin kann dies auch während eines Legeverfahrens und/oder einer manuellen Zusammenführung resultieren.

In einer weiteren bevorzugten Ausführungsform ist das Verfahren dadurch gekennzeichnet, dass in Verfahrensschritt b) zwischen 10 und 50 000 Filamente, bevorzugt zwischen 5000 und 10 000, zu Bündeln geformt werden und zwischen 100 und 10 000 Bündel für das Fleischersatzprodukt miteinander kombiniert werden.

Die angegebenen Zahlenbereiche haben sich dahingehend als besonders vorteilhaft erwiesen, dass sie sich besonders einfach zur Herstellung des Fleischersatzproduktes formen, insbesondere schneiden, verbinden und/oder verpressen ließen. Für die Massenfertigung können insbesondere auch ca. 500 000 - 1 000 000 Filamente kontinuierlich abgezogen und in einem Werkzeug angeordnet und miteinander verbunden.

Im Legeverfahren wird bevorzugt eine Vielzahl von Filamenten (ca. 10 - 50 000) gleichzeitig definiert abgelegt. Die Filamente können am Ende der Form umgelegt und in eine andere Richtung weitergelegt werden. Es entsteht eine Form mit unidirektional liegenden Filamenten. Aufgrund einer bevorzugt digitalen Steuerung können die Positionen der unterschiedlichen Filamente (verschiedene Fett-, Muskel- und/oder Bindegewebefilamente) definiert abgelegt werden. Die Filamente werden bevorzugt mithilfe eines essbaren Binders miteinander verklebt. Der Binder kann während des Legens mithilfe des Legewerkzeuges oder zusätzlich mithilfe von Vakuumverfahren oder im Autoklav zwischen den Filamenten verteilt werden.

In einem weiteren Aspekt betrifft die Erfindung ein Fleischersatzprodukt nach Anspruch 12 hergestellt und/oder herstellbar mit dem erfindungsgemäßen Verfahren nach Anspruch 1.

In einer weiteren bevorzugten Ausführungsform ist das Fleischersatzprodukt hergestellt und/oder herstellbar mit einem Pultrusionsverfahren dadurch gekennzeichnet, dass das Fleischersatzprodukt vordefinierte Regionen für mindestens zwei Fleischnachahmungskomponenten aufweist.

Vorteilhafterweise ist durch das Festlegen von bereits vordefinierten Regionen für mindestens zwei Fleischnachahmungskomponenten im Fleischersatzprodukt in gewisser Weise eine Programmierfähigkeit gegeben. So kann besonders gezielt eine Fleischnachahmungskomponente in Bezug auf die Inhaltsstoffe, die Position und/oder die Optik, beispielsweise die Farbe, festgelegt werden. Hierdurch wird es vorteilhaft ermöglicht, eine besonders realistische Nachahmung von Fleisch zu erlangen, was tierischem Fleisch ins Geschmack und Aussehen außerordentlich nahekommt.

Durch die vordefinierten Regionen liegt bei dem hergestellten Fleischersatzprodukt vorteilhaft eine Programmierfähigkeit vor. Damit kann das Fleischersatzprodukt in sehr großer Stückzahl reproduzierbar hergestellt werden, ohne dabei nennenswerten Aufwand aufbringen zu müssen. Vorteilhafterweise kann das Fleischersatzprodukt besonders prozesseffizient hergestellt werden, da insbesondere die vordefinierten Regionen lediglich einmal zuvor festgelegt werden müssen, um die Fleischersatzprodukte auch im Rahmen einer Massenanfertigung herstellen zu können. Somit können eine sehr hohe Menge an Fleischersatzprodukten hergestellt werden, die sich in Form, Optik und Geschmack im Wesentlichen gleichen.

Darüber hinaus kann vorteilhaft eine Vielzahl von Fleischnachahmungskomponenten realitätsgetreu nachgebildet werden, wie beispielsweise Fett, Knochen, Muskeln, Haut, Sehnen und/oder Knorpel. Somit kann insbesondere auch eine Vielzahl von Fleischprodukten als Fleischersatzprodukt imitiert werden, ohne Einschränkungen zur Imitierung auf bestimmte Fleischprodukte hinnehmen zu müssen, was ein bedeutungsvoller Vorteil ist. So kann vorteilhaft das Fleischersatzprodukt neben ganzen Imitationen von Fleischstücken oder Abschnitten, wie z. B. für Gulasch, Steak und/oder Hackfleisch, auch daraus geformte Produkte, wie z. B. Burgerpatties, Würste, Pasteten und/oder andere Formen von Ausschnitten, umfassen. Das Fleischersatzprodukt kann beispielsweise Fleischstücke verschiedenster Tierarten wie Rind, Lamm, Schwein, Geflügel, Fisch und/oder Muscheln nachahmen, ohne auf diese Beispiele begrenzt zu sein.

Insbesondere umfasst das Fleischersatzprodukt eine Mehrzahl miteinander verbundenen mehrkomponentigen Filamenten dadurch gekennzeichnet, dass die Filamente Wasser, Alginat und Methylcellulose, und zusätzlich Proteine und/oder Fette umfassen, wobei jeweils jedes Filament einen Ummantelungsstoff und einen Füllstoff umfasst, wobei der Ummantelungsstoff den Füllstoff umhüllt, wobei das Fleischersatzprodukt definierte Regionen für mindestens zwei Fleischnachahmungskomponenten aufweist, wobei die Regionen Filamente mit unterschiedlichen Inhaltsstoffen aufweisen.

In einer weiteren bevorzugten Ausführungsform ist das Fleischersatzprodukt umfassend eine Mehrzahl miteinander verbundener mehrkomponentiger Filamente dadurch gekennzeichnet, dass die Filamente Wasser, Alginat und Methylcellulose, und zusätzlich Proteine und/oder Fette umfassen, wobei jeweils einzelne Filamente ein Ummantelungsstoff und ein Füllstoff umfasst, wobei der Ummantelungsstoff den Füllstoff umhüllt, wobei proteinenthaltende Filamente vorhanden sind einen Wasseranteil von über 26 % aufweisen und die Proteine in einer Emulsion umhüllt vom vernetzten Alginat als Ummantelungsstoff vorliegen, wobei das Fleischersatzprodukt definierte Regionen für mindestens zwei Fleischnachahmungskomponenten aufweist, wobei die Regionen Filamente mit unterschiedlichen Inhaltsstoffen aufweisen.

In einer weiteren bevorzugten Ausführungsform umfasst das Fleischersatzprodukt eine Mehrzahl miteinander verbundener mehrkomponentiger Filamente, dadurch gekennzeichnet, dass
die Filamente Wasser, Alginat und Methylcellulose, und zusätzlich Proteine und/oder Fette umfassen,
wobei einzelne Filamente ein Ummantelungsstoff und ein Füllstoff umfassen, wobei der Ummantelungsstoff den Füllstoff umhüllt,
wobei proteinenthaltende Filamente vorhanden sind und einen Wasseranteil von über 26 % aufweisen,
wobei die proteinenthaltende Filamente Proteine in einer Emulsion als Füllstoff umfassen, umhüllt vom vernetzten Alginat als Ummantelungsstoff,
wobei das Fleischersatzprodukt definierte Regionen für mindestens zwei Fleischnachahmungskomponenten aufweist, wobei die Regionen Filamente mit unterschiedlichen Inhaltsstoffen aufweisen.

Hierbei kann in weiteren bevorzugten Ausführungsformen der Wasseranteil bei über 26 %, bevorzugt bei über 30 % liegen, besonders bevorzugt bei über 50 %, ganz besonders bevorzugt bei über 60 % liegen.

In einer weiteren bevorzugten Ausführungsform des Fleischersatzprodukts umfasst dieses eine Mehrzahl miteinander verbundener mehrkomponentiger Filamente dadurch gekennzeichnet, dass die Filamente Wasser, Alginat, und zusätzlich Proteine, Fette, Aroma- , Geschmacks- und/oder Farbstoffe umfassen,
wobei einzelne Filamente ein Ummantelungsstoff und ein Füllstoff umfassen, wobei der Ummantelungsstoff den Füllstoff umhüllt,
wobei Filamente vorhanden sind, die einen Wasseranteil von über 26 % aufweisen, wobei die Filamente Proteine, Fette, Aroma-, Geschmacks- und/oder Farbstoffe als Füllstoff umfassen, umhüllt vom vernetzten Alginat als Ummantelungsstoff,
wobei das Fleischersatzprodukt definierte Regionen für mindestens zwei Fleischnachahmungskomponenten aufweist, wobei die Regionen Filamente mit unterschiedlichen Inhaltsstoffen aufweisen.

Vorzugsweise umfassen die Filamente Proteine und/oder Fette als Füllstoff.

Alginat hat sich hierbei als hervorragender Substituent für Kollagen gezeigt. Kollagen an sich hat einen entscheidenden Einfluss bei tierischen Fleischprodukten. Je nachdem, wie stark das Kollagen im Bindegewebe vernetzt ist, wird das Fleisch als zart oder zäh empfunden. Das Kollagen im Bindegewebe hält das Muskelfleisch fest zusammen. Hierbei gilt, je stärker ein Muskel beansprucht wird, desto besser vernetzt sich das Kollagen und verfestigt das Muskelgewebe. Auch mit zunehmendem Alter des Tieres kann es zu einer verstärkten Vernetzung kommen. Solches Fleisch gilt als sehr zäh und bedarf einer besonderen Zubereitung. Zartes Fleisch liefert hingegen solche Teilstücke, deren Muskeln von den Tieren kaum oder gar nicht beansprucht werden. Dies trifft zum Beispiel auf die Lendenmuskulatur von Rind, Schwein und Lamm zu, die ein sehr zartes Filet abgibt. Vorteilhafterweise lässt sich durch das bevorzugte Fleischersatzprodukt zartes tierisches Fleisch besonders gut nachahmen.

Die beschriebenen Wirkungen von Kollagen konnten im Wesentlichen exakt durch die Zufuhr von Alginat im erfindungsgemäßen Fleischersatzprodukt imitiert werden. Insbesondere kann durch Alginat auch die Vor- und/oder Zubereitung des Fleischersatzproduktes reguliert, insbesondere optimiert, werden.

Die Methylcellulose im Fleischersatzprodukt übt ebenfalls vorteilhafte Effekte auf das Fleischersatzprodukt aus. So kann insbesondere durch die Methylcellulose Wasser und/oder Fett gebunden werden und sich insbesondere beim Erhitzen, beispielsweise beim Braten, stärker vernetzen. Insbesondere wird durch die Methylcellulose Feuchtigkeit, d. h. Wasser, im Füllstoff chemisch gebunden und damit gespeichert. Dies ist vor allem dahingehend relevant, dass beispielsweise Soja- und/oder Erbsenproteine an sich nur geringe, begrenzte Wasseraufnahmefähigkeiten besitzen. Durch den bevorzugten Einsatz von Methylcellulose kann vorteilhafterweise Wasser auch bei hohen Temperaturen gespeichert werden. Daher kann das Fleischersatzprodukt das Geschmackserlebnis in Bezug auf die Restfeuchte vorteilhaft genau nachbilden. Insbesondere kann Feuchtigkeit austreten, wenn man das Fleischersatzprodukt an einer Kante schneidet, was mit den bisherigen Fleischersatzprodukten des Standes der Technik ohne Weiteres nicht möglich war.

Die erwähnten Proteine dienen als Strukturgeber und sind Nährstofflieferanten. Auch Fette können für den Genuss und Verzehr des Fleischersatzproduktes relevant sein. Aber auch Zartheit und Saftigkeit vom Fleischersatzprodukt werden vor allem durch den Gehalt von Fett vorteilhaft beeinflusst. So ist ein gewisser Fettanteil im Fleischersatzprodukt Träger von fettlöslichen Vitaminen und/oder Aromastoffen.

Durch die definierten Regionen im Fleischersatzprodukt liegen gezielt Fleischnachahmungskomponenten vor, um besonders realistisch Fleisch zu imitieren. Insbesondere kann ein tierisches Fleischprodukt sehr detailreich simuliert werden. So kann das Fleischprodukt in den definierten Regionen Muskeln, Sehnen, Hautpartien, Knorpeln und/oder Knochen nachbilden. Dem Verbraucher kann ein sehr guter Eindruck vermittelt werden, echtes tierisches Fleisch zu verzerren, was für den individuellen Genuss des Fleischersatzproduktes von besonders vorteilhafter Bedeutung ist. Dabei zeichnen sich die definierten Regionen im Fleischersatzprodukt dadurch aus, dass jeweils eine Region eine Filamentsorte beinhaltet.

In einer weiteren bevorzugten Ausführungsform ist das Fleischersatzprodukt dadurch gekennzeichnet, dass die Filamente im Wesentlichen entlang einer Längsachse angeordnet sind.

Vorteilhafterweise führt die Orientierung der Filamente im Wesentlichen entlang einer Längsachse dazu, dass der Aufbau von tierischem Fleisch, insbesondere die Marmorierung, besonders gut imitiert werden kann. Des Weiteren wirkt sich die Orientierung der Filamente im Wesentlichen entlang einer Längsachse auch vorteilhaft auf das Geschmackserlebnis aus, da ein besonders aromatisches, saftiges und/oder zartes Fleischersatzprodukt bereitgestellt werden kann.

In einer weiteren bevorzugten Ausführungsform ist das Fleischersatzprodukt dadurch gekennzeichnet, dass die jeweiligen Fleischnachahmungskomponenten aus Filamenten mit unterschiedlichen Inhaltsstoffe gebildet sind, wobei Fleischnachahmungskomponenten für eine Muskelnachahmung und Fettnachahmung vorhanden sind.

Wie bereits ausgeführt, weist das Fleischersatzprodukt bevorzugt Regionen auf, in denen Fleischnachahmungskomponenten vorliegen und tierische Fleischkomponenten imitiert werden sollen. So kann es beispielsweise sein, dass in einem Fleischersatzprodukt eine Muskelnachahmung und eine Fleischnachahmung vorliegen sollen, um entsprechend tierische Muskeln und Fette nachzubilden. Dabei bezeichnen eine Muskelnachahmung eine Region zur Nachahmung von Muskeln und entsprechend eine Fettnachahmung eine Region zur Nachahmung von Fetten. Dazu weisen diese Regionen Filamente mit unterschiedlichen Inhaltsstoffen auf, um diese Regionen zu bilden. Für eine Muskelnachahmung sind Proteinfilamente bevorzugt, während für eine Fettnachahmung vorzugsweise Fettfilamente eingesetzt werden.

Vorzugsweise liegen auch mehrere definierte Regionen vor, die verschiedene Komponenten von tierischem Fleisch hinsichtlich der Position und den Inhaltsstoffen imitieren und damit auch den Geschmack nachbilden können. Das Fleischersatzprodukt zeichnet sich durch ein besonders hohes realistisches Abbild von echtem Fleisch aus und ist in der Herstellung besonders kostengünstig und prozesseffizient. Darüber hinaus liefert das erfindungsgemäße Fleischersatzprodukt einem Verbraucher ein besonders genussvolles Geschmackserlebnis.

Die Marmorierung kann dabei mit einer Genauigkeit von bis zu ca. 150 µm (Mikrometer) eingestellt werden. Die Genauigkeit wird dabei vom Durchmesser der Filamente bestimmt. Damit lassen sich von Rib-Eye- über Wagyu bis hin zu Filetstücken alle möglichen Fett-/ Muskelfaserzusammensetzungen nachbauen. Es können auch Geschmackserlebnisse kreiert werden, die bisher in der klassischen Zucht nicht möglich waren.

Ferner wird ein System vorgeschlagen, (nicht Teil der Erfindung) welches dazu konfiguriert ist, das erfindungsgemäße Verfahren zur Herstellung eines Fleischersatzproduktes auszuführen. Das System kann unter anderem Komponenten, Anlagen, Vorrichtungen etc., umfassen, um Schritte des Verfahrens durchzuführen. So kann es sein, dass das System als Komponenten eine Spinnanlage, ein Koagulationsbad, eine Führung, ein Gitter und/oder eine Pultrusionsanlage aufweist. Strukturelle Merkmale, mit denen das Verfahren ausgeführt werden kann, sind als Komponenten des Systems aufzufassen. Das System umfasst diejenigen Komponenten, insbesondere alle Komponenten, mit denen das Verfahren und/oder Schritte des Verfahrens ausgeführt werden können.

Das System zur Herstellung eines Fleischersatzproduktes (nicht Teil der Erfindung) ist konfiguriert für
a) die Bereitstellung einer Mehrzahl von mehrkomponentigen Filamenten umfas send Wasser, und zusätzlich Proteine und/oder Fette, wobei einzelne Filamente ein Ummantelungsstoff und ein Füllstoff umfassen, wobei der Ummantelungsstoff den Füllstoff umhüllt, und
b) die Erstellung einer Filamentanordnung umfassend der in Verfahrensschritt a) bereitgestellten Filamente,
   wobei die Filamentanordnung vordefinierte Regionen für mindestens zwei Fleischnachahmungskomponenten umfasst,
   wobei die Filamente miteinander verbunden und die Filamentanordnung als Fleischersatzprodukt unter Einsatz eines Pultrusionsverfahrens geformt wird.

In einer weiteren Ausführungsform ist das System (nicht Teil der Erfindung) dadurch gekennzeichnet, dass der Ummantelungsstoff Alginat umfasst, wobei vorzugsweise der Ummantelungsstoff eine Außenhülle umfassend vernetztes Alginat an einer Außenseite des Filaments bildet und Alginat innerhalb des Füllstoffs vorliegt.

In einer weiteren Ausführungsform ist das System dadurch gekennzeichnet dass der Füllstoff ein Verdickungsmittel, Bindemittel und/oder Emulgator umfasst, wobei der Füllstoff vorzugsweise Methylcellulose umfasst, und/oder der Füllstoff ausgewählt ist aus einer Gruppe umfassend Alginat, Fett, Proteine, bevorzugt Sojaproteine und/oder Erbsenproteine und/oder Sonnenblumenprotein, Calcium Lactat, Calcium Chlorid, Wasser, Methylcellulose, Lipide, Aromastoffe und/oder Farbstoffe.

In einer weiteren Ausführungsform ist das System dadurch gekennzeichnet dass vor dem Verfahrensschritt eine Herstellung der mehrkomponentigen Filamente durch ein durchführbar ist, bevorzugt durch eine Spinnanlage und/oder eine Extrusionsanlage. Eine Spinnanlage bezeichnet vorzugsweise eine Anlage, die dazu konfiguriert, eine Spinnverfahren auszuführen. Eine Extrusionsanlage bezeichnet vorzugsweise eine Anlage, die dazu konfiguriert ist, ein Extrusionsverfahren auszuführen. Die Spinnanlage und/oder Extrusionsanlage sind insbesondere bevorzugte Komponenten des Systems.

In einer weiteren Ausführungsform ist das System dadurch gekennzeichnet dass das System ein Fördermittel aufweist, sodass eine Spinnmasse umfassend Wasser, Alginat und Methylcellulose, und zusätzlich Proteine und/oder Fette, zu einer Spinndüse beförderbar ist und/oder zwischen dem Fördermittel und der Spinndüse eine Temperatur zwischen 20°C und 180°C vorliegt. Dazu ist es bevorzugt, dass das System eine Spinndüse aufweist, wobei vorzugsweise die Spinndüse eine Komponente der Spinnanlage ist. Damit ist die Spinndüse auch eine bevorzugte Komponente des Systems.

In einer weiteren Ausführungsform ist das System dadurch gekennzeichnet dass die Filamente nach einem Austritt aus einer Spinndüse mit einer Lösung umfassend Calcium, Calciumlactat und/oder Alginat kontaktierbar sind, wobei bevorzugt die Lösung eine Temperatur zwischen 0°C und 80°C aufweist.

In einer weiteren Ausführungsform ist das System dadurch gekennzeichnet dass die Filamente aus einer Spinndüse abziehbar, trocken bar und/oder verstreckbar und anschließend lagerbar sind, wobei bevorzugt ein Lagern auf einer Rolle ausführbar ist, vorzugsweise bevor die Filamente in b) einsetzbar sind.

In einer weiteren Ausführungsform ist das System dadurch gekennzeichnet dass das System eine Führung aufweist, sodass die Filamente für die Filamentanordnung in vordefinierten Regionen durch das Gitter zur Positionierung von mehreren Filamenten mit unterschiedlichen Inhaltsstoffen für Fleischnachahmungskomponenten ziehbar und miteinander verpressbar sind.

In einer weiteren Ausführungsform ist das System dadurch gekennzeichnet dass in b) die Filamente mit einem essbaren Binder kontaktierbar sind, wobei die essbaren Binder ausgewählt sind aus einer Gruppe umfassend Alginat, Albumin, bevorzugt Ei-Albumin, Soja-Albumin und/oder Weizenalbumin, und/oder Getreidegluten, bevorzugt Weizengluten und/oder Roggengluten, besonders bevorzugt ein Enzym zur Quervernetzung von Proteinen, ganz besonders bevorzugt Transglutaminase.

In einer weiteren Ausführungsform ist das System dadurch gekennzeichnet dass die Filamente eine Querschnittsfläche zwischen 0,03 - 3 mm², bevorzugt zwischen 0,04 - 2,5 mm², besonders bevorzugt zwischen 0,08 - 0,3 mm² aufweisen, und/oder im Fleischersatzprodukt 50 - 10 000 Filamenten, beispielsweise 100 - 5000 oder 500 - 2000 Filamenten miteinander verbunden sind.

Der durchschnittliche Fachmann erkennt, dass technische Merkmale, Definitionen und Vorteile der Ausführungsformen, die für das erfindungsgemäßen Verfahren zur Herstellung eines Fleischersatzproduktes gelten, gleichermaßen auch für das mit dem Verfahren herstellbaren Fleischersatzprodukt gelten, insbesondere für das Fleischersatzprodukt umfassend eine Mehrzahl miteinander verbundener mehrkomponentiger Filamente, und umgekehrt. Des Weiteren gelten technische Merkmale, Definitionen und Vorteile der Ausführungsformen, die für das erfindungsgemäßen Verfahren zur Herstellung eines Fleischersatzproduktes gelten, gleichermaßen auch für das bevorzugte System, und umgekehrt.

Das erfindungsgemäße Verfahren und Fleischersatzprodukt sollen im Folgenden anhand von Beispielen näher erläutert werden, ohne auf diese Beispiele beschränkt zu sein.

### FIGUREN

### Kurzbeschreibung der Figuren

- **Fig.1**: Darstellung einer Vorrichtung zur Durchführung eines Spinnverfahrens
- **Fig. 2**: Schematisches Darstellung eines Filaments
- **Fig. 3**: Schematische Darstellung der Proteine in einem Filament
- **Fig. 4**: Darstellung einer Vorrichtung zur Durchführung eines Legeverfahrens
- **Fig. 5**: Schematische Darstellung einer Vorrichtung zur Durchführung einer Pultrusion
- **Fig. 6**: Abbild eines Fleischersatzproduktes

### Detaillierte Beschreibung der Figuren

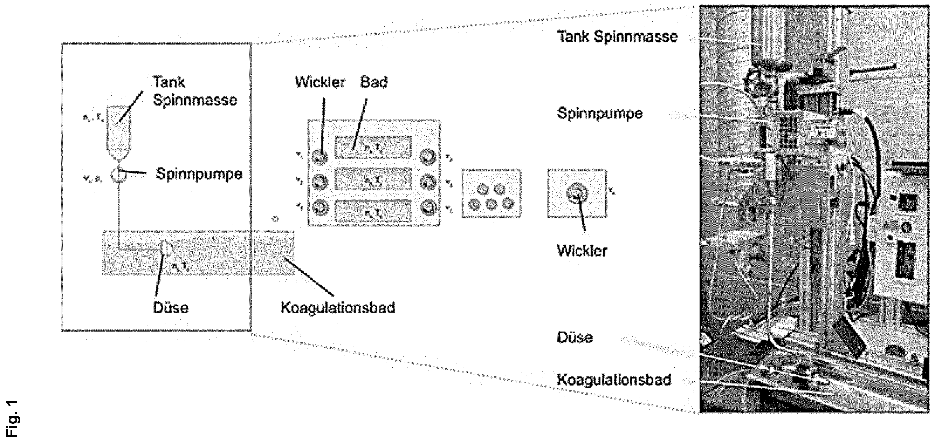

**Fig. 1** zeigt eine Darstellung einer Vorrichtung zur Durchführung eines Spinnverfahrens. Ein Spinnverfahren, insbesondere ein Nassspinnverfahren, kann im erfindungsgemäßen Kontext eingesetzt werden, um die Filamente bereitzustellen. Die **Fig. 1** fasst wesentliche Komponenten zur Durchführung zusammen.

Die Spinnmasse wird in einem niedrigviskosen Zustand in einen Tank gefüllt. Der Tank kann mit Druck beaufschlagt werden, um das Fließverhalten der Spinnmasse zu verbessern. Außerdem kann der Tank beheizt werden. Besser ist eine Heizstrecke zwischen der Spinnpumpe und der Spinndüse. Die Spinnmasse wird von einer Spinnpumpe gefördert. Die Spinnpumpe wird mittels einer Drehzahl gesteuert und fördert ein definiertes Volumen pro Umdrehung. Hinter der Spinnpumpe befindet sich ein feinmaschiges Sieb, um eine Gleichmäßigkeit der Spinnmasse zu erlangen und zu vergleichmäßigen und eventuelle Partikel herauszufiltern, die die Spinndüsen zusetzen könnten.

Die Spinnpumpe drückt die Spinnmasse durch die Spinndüse. Zwischen Spinndüse und Spinn pumpe baut sich ein Druck auf, der abhängig ist von der Viskosität der Spinnmasse und der Öffnung der Spinndüse.

Die Spinndüse bestimmt die Geometrie und die Anzahl parallel produzierter Filamente. Dabei kann die Geometrie der Querschnitte über die Form des Loches gesteuert werden. Die Geometrie der Filamente hängt darüber hinaus noch vom Sehwellverhalten der Filamente hinter der Düse ab und kann stark über die Abzugsgeschwindigkeit eines Wicklers beeinflusst werden. Darüber hinaus kann eine Strömung im Koagulationsbad eingesetzt werden, um das Filament zu verstrecken.

Als Spinnmasse werden verschiedene Bestandteile miteinander kombiniert. Dabei sind drei wesentliche strukturelle Bestandteile zu unterscheiden: Es wird ein Protein eingesetzt, das bei einer Temperatur zwischen 20 - 80°C innerhalb von 1 - 60 Minuten vernetzbar ist, es wird ein Alginat eingesetzt, das mithilfe von Abbindemitteln (beispielsweise Calciumlactat) ausgehärtet werden kann und es wird Methylcellulose eingesetzt, die Wasser und Fett binden kann und sich bei Hitze stärker vernetzt. Im Nassspinnverfahren befindet sich das Calcium und/oder das Calciumlactat im Koagulationsbad.

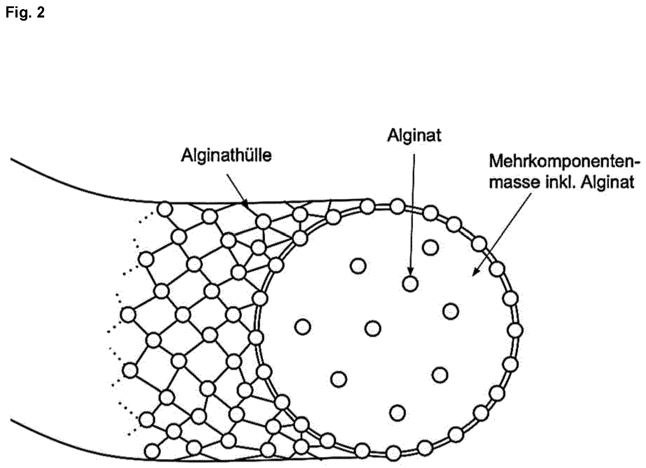

**Fig. 2** zeigt eine schematische Darstellung der Ausbildung einer Alginathülle im Koagulationsbad, das Calcium und/oder Calciumlactat beinhaltet. Hierbei bildet sich an der Außenseite eines Filaments ein Netzwerk durch eine Alginathülle, wobei Alginat in geringer Konzentration vorliegt, z. B. ca. 1 - 5 %.

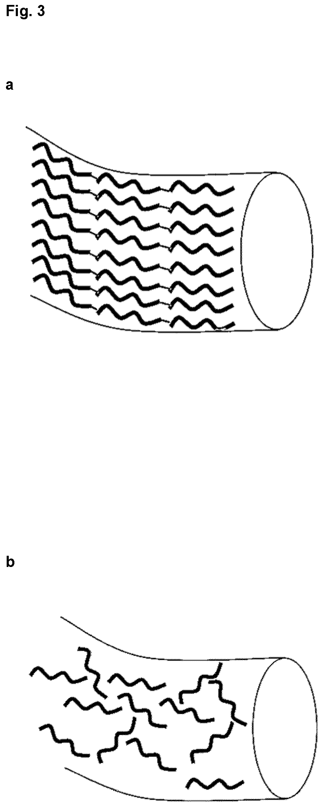

**Fig. 3** präsentiert schematisch die Ausrichtung der Proteine in einem Filament. In **Fig** 3a sind die Proteine im Wesentlichen entlang einer Längsachse des Filaments ausgerichtet, während sie in **Fig.** 3b nicht ausgerichtet sind. Eine gerichtete Anordnung im Wesentlichen entlang der Längsachse eines Filaments ist bevorzugt, um optimalere mechanische Eigenschaften zu erlangen. Die entsprechende Anordnung kann z. B. durch ein Verstrecken der Filamente erreicht werden.

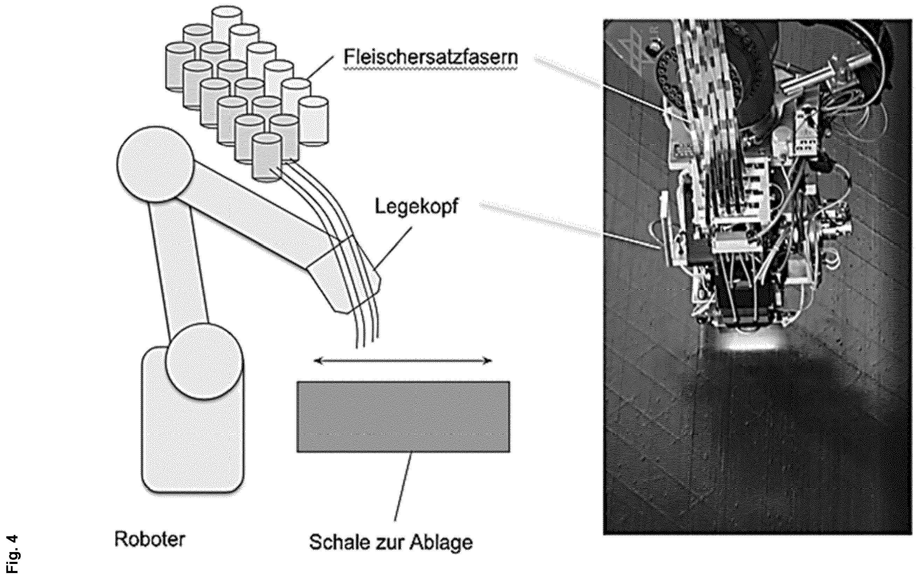

In **Fig. 4** wird schematisch und real eine Vorrichtung zur Durchführung eines Legeverfahrens dargestellt. Im Legeverfahren wird eine Vielzahl von Filamenten (z. B. 10 - 50.000) gleichzeitig definiert abgelegt. Die Filamente können am Ende eine Form umgelegt und in eine andere Richtung weitergelegt werden. Es entsteht eine Form mit unidirektional liegenden Filamenten. Aufgrund der digitalen Steuerung des Legeapparates können die Positionen der unterschiedlichen Filamente (verschiedene Fett, Muskel und Bindegewebsfasern) definiert abgelegt werden. Die Filamente werden mithilfe eines essbaren Binders miteinander verklebt. Der Binder kann während des Legens mithilfe des Legewerkzeuges oder zusätzlich mithilfe von Vakuumverfahren oder im Autoklav zwischen den Filamenten verteilt werden.

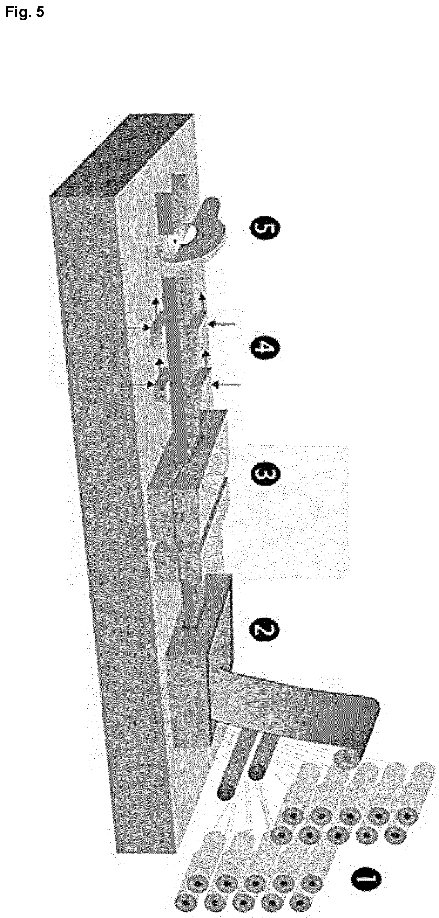

**Fig. 5** zeigt eine Vorrichtung zur Durchführung eines Pultrusionsverfahrens (auch Pultrusion, Strangziehverfahren und/oder Strangziehen genannt). In diesem kontinuierlichen Herstellungsprozess wird durch die gezielte Verbindung von Filamenten und Bindersystemen ein Profil erstellt. Das Pultrusionsverfahren bietet vorteilhaft ein sehr hohes Maß an Gestaltungsfreiheit für die Filamente. Der Prozess ermöglicht die Fertigung von Profilen mit individuellen Eigenschaften und Geometrien für das Fleischersatzprodukt.

So liegen in 1 die Filamente auf Rollen vor. Die Filamente werden in 2 ausgehend von den Rollen in einer Tränkwanne durchtränkt, die beispielsweise einen essbaren Binder beinhalten kann und dadurch die Filamente miteinander verbunden werden. Der Abschnitt 3 kann eine Vielzahl von möglichen Werkzeugen aufweisen, um die gewünschte Form des Fleischersatzproduktes zu erhalten. Dabei können die Filamente beispielsweise durch eine Zufuhr erhöhter Temperatur erhitzt und daraufhin ausgehärtet werden. Anschließend kann durch ein Tandemanzug bei 4 das Profil kontinuierlich auf dem Werkzeug gezogen werden. In kann der Zuschnitt des Profils durchgeführt werden, um die abschließenden Ausmaße, insbesondere die gewünschte Länge, zu erhalten.

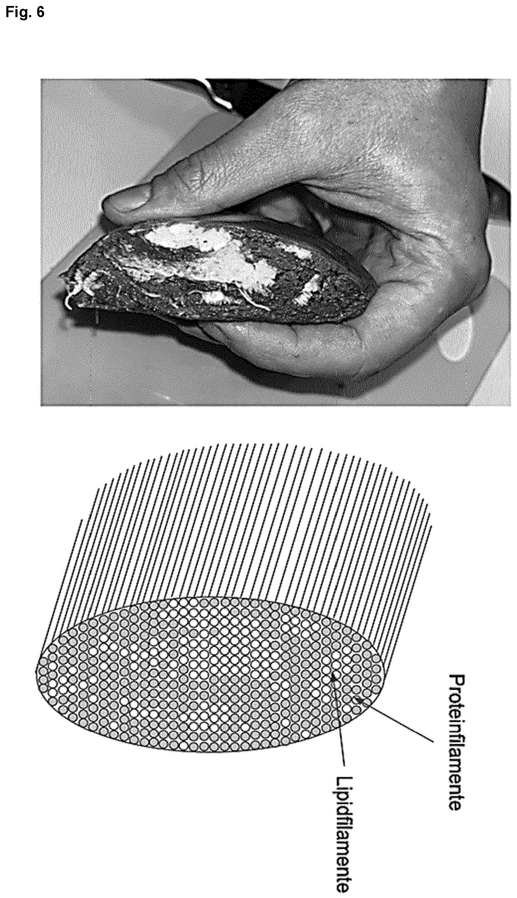

**Fig. 6** bildet ein Foto und eine entsprechende schematische Anordnung der Filamente zur Nachahmung bestimmter Fleischkomponenten ab. Die Abbildung zeigt besonders gut die Programmierfähigkeit des Fleischersatzproduktes, da unterschiedliche Filamenten, hierbei Proteinfilamente und Lipidfilamente sowie Bindegewebe, welches die Filamente zusammenhält, fest zugeordnete Positionen haben. Hierdurch kann ein Fleischersatzprodukt geschaffen werden, das einem tierischen Fleischprodukt außerordentlich nahekommt.

## Patentansprüche

1. Verfahren zur Herstellung eines Fleischersatzproduktes umfassend folgende Verfahrensschritte:
a) Bereitstellung einer Mehrzahl von mehrkomponentigen Filamenten mit einer Querschnittsfläche zwischen 0,03 - 3 mm², welche Wasser, und zusätzlich Proteine und/oder Fette aufweisen, und mindestens eine erste Filamentsorte mit Filamenten aus im Wesentlichen gleichen Inhaltsstoffen und eine zweite Filamentsorte mit Filamenten aus im Wesentlichen gleichen Inhaltsstoffen ausbilden, wobei die einzelnen Filamente einen Füllstoff und einen Ummantelungsstoff umfassen, der den Füllstoff umhüllt,
b) Erstellung einer Filamentanordnung mit einer ersten vordefinierten Region und einer zweiten vordefinierten Region, mit den Teilschritten:
b1) Zusammenfassen der Filamente der ersten Filamentsorte zu Bündeln und Zuordnen der Filamente der ersten Filamentsorte zu einer ersten vorbestimmten Position im Fleischersatzprodukt zum Ausbilden der ersten vordefinierten Region, welche zum Ausbilden einer ersten Fleischnachahmungskomponente eingerichtet ist,
b2) Zusammenfassen der Filamente der zweiten Filamentsorte zu Bündeln und Zuordnen der Filamente der zweiten Filamentsorte zu einer zweiten vorbestimmten Position im Fleischersatzprodukt zum Ausbilden der zweiten vordefinierten Region, welche zum Ausbilden einer zweiten Fleischnachahmungskomponente eingerichtet ist,
b3) Verbinden der Mehrzahl von mehrkomponentigen Filamenten miteinander,
c) Formen der Filamentanordnung zu einem Fleischersatzprodukt.

2. Verfahren nach dem vorherigen Anspruch,
**dadurch gekennzeichnet, dass** die Filamente einen Ummantelungsstoff und einen Füllstoff umfassen, wobei der Ummantelungsstoff den Füllstoff umhüllt und Alginat umfasst, wobei vorzugsweise der Ummantelungsstoff eine Außenhülle umfassend vernetztes Alginat an einer Außenseite des Filaments bildet und Alginat innerhalb des Füllstoffs vorliegt.

3. Verfahren nach einem oder mehreren der vorherigen Ansprüche, **dadurch gekennzeichnet, dass** die Inhaltsstoffe der ersten Filamentsorte von den Inhaltsstoffen der zweiten Filamentsorte verschieden sind.

4. Verfahren nach einem oder mehreren der vorherigen Ansprüche,
**dadurch gekennzeichnet, dass** vor dem Verfahrensschritt a) ein Verfahrensschritt a-1) umfassend eine Herstellung der mehrkomponentigen Filamente durch ein Spinnverfahren und/oder ein Extrusionsverfahren durchgeführt wird.

5. Verfahren nach dem vorherigen Anspruch,
**dadurch gekennzeichnet, dass** in Verfahrensschritt a-1) ein Fördermittel eine Spinnmasse umfassend Wasser, Alginat und Methylcellulose, und zusätzlich Proteine und/oder Fette, zu einer Spinndüse befördert und/oder zwischen dem Fördermittel und der Spinndüse eine Temperatur zwischen 20°C und 180°C, zum Beispiel zwischen 20°C und 80°C, vorliegt, und/oder
die Filamente in Verfahrensschritt a-1) nach einem Austritt aus einer Spinndüse mit einer Lösung umfassend Calcium, Calciumlactat und/oder Alginat kontaktiert werden, wobei bevorzugt die Lösung eine Temperatur zwischen 0°C und 80°C aufweist.

6. Verfahren nach einem oder mehreren der vorherigen Ansprüche 4 und 5,
**dadurch gekennzeichnet, dass** die Filamente in Verfahrensschritt a-1) aus einer Spinndüse abgezogen, getrocknet und/oder verstreckt und anschließend gelagert werden, wobei bevorzugt ein Lagern auf einer Rolle erfolgt, bevor die Filamente in Verfahrensschritt b) eingesetzt werden.

7. Verfahren nach einem oder mehreren der vorherigen Ansprüche,
**dadurch gekennzeichnet, dass** das Erstellen der Filamentanordnung in Schritt b) ferner umfasst:
- Ablegen der Filamente mindestens der ersten Filamentsorte und der zweiten Filamentsorte in einem Legeverfahren unter Anwendung von Druck und/oder Temperatur und/oder dem Einsatz eines Bindemittels entlang eines vorgegebenen Pfads zum Ausbilden der ersten vordefinierten Region und der zweiten vordefinierten Region, und/oder
dass das Formen der Filamentanordnung in Schritt c) ferner umfasst:
- Verpressen und/oder Schneiden der Filamente und/oder Faserbündel umfasst.

8. Verfahren nach einem oder mehreren der vorherigen Ansprüche,
wobei Schritt b) ferner umfasst:
- Ziehen der Filamente durch eine Anordnung von einem oder mehreren Gittern zum Anordnen und Bündeln der Filamente, oder
wobei Schritt b) ferner unter Einsatz eines Pultrusionsverfahrens durchgeführt wird, in welchem die Filamente abgezogen und/oder gefördert, angeordnet und miteinander verbunden werden.

9. Verfahren nach einem oder mehreren der vorherigen Ansprüche,
**dadurch gekennzeichnet, dass** das Verbinden der Filamente in Schritt b3) umfasst:
- Verpressen der Filamente der ersten Filamentsorte miteinander, derart, dass die Filamente der ersten Filamentsorte miteinander verbunden werden, und
- Verpressen der Filamente der zweiten Filamentsorte miteinander, derart, dass die Filamente der zweiten Filamentsorte miteinander verbunden werden, und/oder in Verfahrensschritt b3) die Filamente mit einem essbaren Binder kontaktiert werden, wobei die essbaren Binder ausgewählt sind aus einer Gruppe umfassend Alginat, Albumin, bevorzugt Ei-Albumin, Soja-Albumin und/oder Weizenalbumin, und/oder Getreidegluten, bevorzugt Weizengluten und/oder Roggengluten, besonders bevorzugt ein Enzym zur Quervernetzung von Proteinen, ganz besonders bevorzugt Transglutaminase.

10. Verfahren nach einem oder mehreren der vorherigen Ansprüche,
**dadurch gekennzeichnet, dass** die Filamente, welche Wasser, und zusätzlich Proteine aufweisen, Proteinfilamente ausbilden, und einen Wasseranteil von über 26 %, bevorzugt von über 30 %, besonders bevorzugt von über 50 % aufweisen, und/oder die Filamente eine Querschnittsfläche zwischen 0,04 - 2,5 mm², besonders bevorzugt zwischen 0,08 - 0,3 mm², aufweisen, und/oder
in Verfahrensschritt b) zwischen 10 und 50 000 Filamente, bevorzugt zwischen 5000 und 10 000, zu Bündeln geformt werden und zwischen 100 und 10 000 Bündel für das Fleischersatzprodukt miteinander kombiniert werden.

11. Verfahren nach einem oder mehreren der vorherigen Ansprüche,
wobei in Schritt b) mindestens eines der folgenden eingestellt wird:
- die Textur des Fleischersatzproduktes durch Regulieren der Dichte der Filamente,
- die Festigkeit durch Regulieren der Dichte, der Anzahl und/oder der Größe der Filamente,
- das äußere Erscheinungsbild, insbesondere Marmorierung und/oder Farbe, durch Regulieren der Dichte, der Anzahl und/oder der Größe der Filamente.

12. Fleischersatzprodukt hergestellt und/oder herstellbar mit einem Verfahren nach einem oder mehreren der vorherigen Ansprüche,
wobei das Fleischersatzprodukt durch eine Filamentanordnung mit einer Mehrzahl von mehrkomponentigen Filamenten, die eine Querschnittsfläche zwischen 0,03 bis 3 mm² aufweisen und die Wasser, und zusätzlich Proteine und/oder Fette umfassen, geformt ist,
wobei die einzelnen Filamente einen Füllstoff und einen Ummantelungsstoff umfassen, der den Füllstoff umhüllt, und
wobei die Filamentanordnung umfasst:
eine erste vordefinierte Region, die zum Ausbilden einer ersten Fleischnachahmungskomponente eingerichtet ist, und die durch zu Bündeln zusammengefasste Filamente der Mehrzahl von mehrkomponentigen Filamenten einer ersten Filamentsorte gebildet ist, die einer ersten Position im Fleischersatzprodukt zugeordnet sind,
eine zweite vordefinierte Region, die zum Ausbilden einer zweiten Fleischnachahmungskomponente eingerichtet ist, und die durch zu Bündeln zusammengefasste Filamente der Mehrzahl von mehrkomponentigen Filamenten einer zweiten Filamentsorte gebildet ist, die einer zweiten Position im Fleischersatzprodukt zugeordnet sind,
wobei die Filamente in der Filamentanordnung miteinander verbunden sind.

13. Fleischersatzprodukt nach Anspruch 12,
wobei die Filamente, welche Wasser, und zusätzlich Proteine aufweisen, Proteinfilamente, ausbilden, die einen Wasseranteil von über 26 %, bevorzugt von über 30 %, besonders bevorzugt von über 50 % aufweisen.

14. Fleischersatzprodukt nach dem vorherigen Anspruch,
**dadurch gekennzeichnet, dass** die Filamente ferner Alginat, Aroma-, Geschmacks- und/oder Farbstoffe umfassen, und
die Filamente Proteine, Fette, Aroma-, Geschmacks- und/oder Farbstoffe als Füllstoff umfassen, umhüllt von vernetzten Alginat als Ummantelungsstoff, wobei die definierten Regionen Filamente mit unterschiedlichen Inhaltsstoffen aufweisen.

15. Fleischersatzprodukt nach einem oder mehreren der Ansprüche 12, 13 und/oder 14, **dadurch gekennzeichnet, dass** die Filamente im Wesentlichen entlang einer Längsachse angeordnet sind und/oder die jeweiligen Fleischnachahmungskomponenten aus Filamenten mit unterschiedlichen Inhaltsstoffe gebildet sind, wobei Fleischnachahmungskomponenten für eine Muskelnachahmung und Fettnachahmung vorhanden sind.

## Claims

1. Method for producing a meat analogue product comprising the following process steps:
a) providing a plurality of multi-component filaments having a cross-sectional area between 0.03 - 3 mm², which comprise water, and additionally proteins and/or fats, and form at least a first type of filament with filaments of substantially identical ingredients and a second type of filament with filaments of substantially identical ingredients, wherein the individual filaments comprise a filler and a coating material that encloses the filler,
b) creating a filament arrangement with a first predefined region and a second predefined region, with the sub-steps:
b1) bundling the filaments of the first type of filament and assigning the filaments of the first type of filament to a first predetermined position in the meat analogue product to form the first predefined region, which is configured to form a first meat-imitation component,
b2) bundling the filaments of the second type of filament and assigning the filaments of the second type of filament to a second predetermined position in the meat analogue product to form the second predefined region, which is configured to form a second meat-imitation component,
b3) connecting the plurality of multi-component filaments to one another,
c) forming the filament arrangement into a meat analogue product.

2. Method according to the preceding claim, **characterised in that** the filaments comprise a coating material and a filler, wherein the coating material encloses the filler and comprises alginate, wherein preferably the coating material forms an outer shell comprising crosslinked alginate on an outer side of the filament and alginate is present within the filler.

3. Method according to one or more of the preceding claims, **characterised in that** the ingredients of the first type of filament differ from the ingredients of the second type of filament.

4. Method according to one or more of the preceding claims, **characterised in that**, prior to process step a), a process step a-1) is carried out comprising producing the multi-component filaments by a spinning process and/or an extrusion process.

5. Method according to the preceding claim, **characterised in that** in process step a-1) a conveying means conveys a spinning dope comprising water, alginate and methylcellulose, and additionally proteins and/or fats, to a spinneret and/or a temperature between 20°C and 180°C, for example between 20°C and 80°C, is present between the conveying means and the spinneret, and/or
the filaments in process step a-1) are contacted, after exiting a spinneret, with a solution comprising calcium, calcium lactate and/or alginate, wherein preferably the solution has a temperature between 0°C and 80°C.

6. Method according to one or more of the preceding claims 4 and 5, **characterised in that** the filaments in process step a-1) are drawn off from a spinneret, dried and/or stretched and subsequently stored, wherein storing on a bobbin preferably takes place before the filaments are used in process step b).

7. Method according to one or more of the preceding claims,
**characterised in that** creating the filament arrangement in step b) further comprises:
- laying the filaments of at least the first type of filament and the second type of filament in a laying process using pressure and/or temperature and/or the use of a binder along a predetermined path to form the first predefined region and the second predefined region, and/or
that forming the filament arrangement in step c) further comprises:
- pressing and/or cutting of the filaments and/or fibre bundles.

8. Method according to one or more of the preceding claims, wherein step b) further comprises:
- drawing the filaments through an arrangement of one or more grids for arranging and bundling the filaments, or
wherein step b) is further carried out using a pultrusion process, in which the filaments are drawn off and/or conveyed, arranged and connected to one another.

9. Method according to one or more of the preceding claims, **characterised in that** connecting the filaments in step b3) comprises:
- pressing the filaments of the first type of filament together, such that the filaments of the first type of filament are connected to one another, and
- pressing the filaments of the second type of filament together, such that the filaments of the second type of filament are connected to one another, and/or in process step b3) the filaments are contacted with an edible binder, wherein the edible binders are selected from a group comprising alginate, albumin, preferably egg albumin, soy albumin and/or wheat albumin, and/or cereal gluten, preferably wheat gluten and/or rye gluten, particularly preferably a cross-linking enzyme for proteins, most particularly preferably transglutaminase.

10. Method according to one or more of the preceding claims,
**characterised in that** the filaments, which comprise water and additionally proteins, form protein filaments and have a water content of more than 26%, preferably of more than 30%, particularly preferably of more than 50%, and/or the filaments have a cross-sectional area between 0.04 - 2.5 mm², particularly preferably between 0.08 - 0.3 mm², and/or in process step b) between 10 and 50,000 filaments, preferably between 5,000 and 10,000, are formed into bundles and between 100 and 10,000 bundles are combined with one another for the meat analogue product.

11. Method according to one or more of the preceding claims, wherein in step b) at least one of the following is adjusted:
- the texture of the meat analogue product by regulating the density of the filaments,
- the strength by regulating the density, the number and/or the size of the filaments,
- the external appearance, in particular marbling and/or colour, by regulating the density, the number and/or the size of the filaments.

12. Meat analogue product produced and/or producible with a method according to one or more of the preceding claims, wherein the meat analogue product is formed by a filament arrangement with a plurality of multi-component filaments having a cross-sectional area between 0.03 to 3 mm² and comprising water, and additionally proteins and/or fats, wherein the individual filaments comprise a filler and a coating material that encloses the filler, and wherein the filament arrangement comprises:
a first predefined region configured to form a first meat-imitation component, and which is formed by filaments bundled together of the plurality of multi-component filaments of a first type of filament, which are assigned to a first position in the meat analogue product,
a second predefined region configured to form a second meat-imitation component, and which is formed by filaments bundled together of the plurality of multi-component filaments of a second type of filament, which are assigned to a second position in the meat analogue product,
wherein the filaments in the filament arrangement are connected to one another.

13. Meat analogue product according to claim 12,
wherein the filaments, which comprise water and additionally proteins, form protein filaments having a water content of more than 26%, preferably of more than 30%, particularly preferably of more than 50%.

14. Meat analogue product according to the preceding claim,
**characterised in that** the filaments further comprise alginate, flavourings, flavour substances and/or colorants, and the filaments comprise proteins, fats, flavourings, flavour substances and/or colorants as filler, enclosed by crosslinked alginate as coating material, wherein the defined regions comprise filaments with different ingredients.

15. Meat analogue product according to one or more of claims 12, 13 and/or 14,
**characterised in that** the filaments are arranged substantially along a longitudinal axis and/or the respective meat-imitation components are formed from filaments with different ingredients, wherein meat-imitation components for a muscle imitation and fat imitation are present.

## Revendications

1. Procédé de fabrication d'un produit de substitution de viande comprenant des étapes de procédé suivantes :
a) la mise à disposition d'une multitude de filaments multicomposants d'une surface de section transversale entre 0,03 - 3 mm2, qui présentent de l'eau, et en supplément des protéines et/ou des graisses et qui forment au moins un premier type de filament avec des filaments composés d'ingrédients sensiblement identiques et un deuxième type de filament avec des filaments composés d'ingrédients sensiblement identiques, dans lequel les filaments individuels comprennent une charge et une matière d'enrobage, qui enveloppe la charge,
b) la création d'un ensemble de filaments avec une première région prédéfinie et une deuxième région prédéfinie, avec les sous-étapes :
b1) le regroupement des filaments du premier type de filament pour regrouper et associer les filaments du premier type de filament à une première position prédéfinie dans le produit de substitution de viande pour former la première région prédéfinie, qui est mise au point pour former un premier composant d'imitation de viande,
b2) le regroupement des filaments du deuxième type de filament pour regrouper et associer les filaments du deuxième type de filament à une deuxième position prédéfinie dans le produit de substitution de viande pour former la deuxième région prédéfinie, qui est mise au point pour former un deuxième composant d'imitation de viande,
b3) l'assemblage de la multitude de filaments multicomposants les uns aux autres,
c) le façonnage de l'ensemble de filaments pour former un produit de substitution de viande.

2. Procédé selon la revendication précédente,
**caractérisé en ce que** les filaments comprennent une matière d'enrobage et une charge, dans lequel la matière d'enrobage enveloppe la charge et comprend de l'alginate, dans lequel de préférence la matière d'enrobage forme une enveloppe externe comprenant de l'alginate réticulé sur une face externe du filament et de l'alginate est présent à l'intérieur de la charge.

3. Procédé selon l'une quelconque ou plusieurs des revendications précédentes,
**caractérisé en ce que** les ingrédients du premier type de filament sont différents des ingrédients du deuxième type de filament.

4. Procédé selon l'une quelconque ou plusieurs des revendications précédentes,
**caractérisé en ce qu'**avant l'étape de procédé a), une étape de procédé a-1) comprenant une fabrication des filaments multicomposants par un procédé de filage et/ou un procédé d'extrusion est mise en œuvre.

5. Procédé selon la revendication précédente,
**caractérisé en ce qu'**à l'étape de procédé a-1), un moyen de transport transporte une masse de filage comprenant de l'eau, de l'alginate et de la méthylcellulose, et en supplément des protéines et/ou des graisses, vers une buse de filage et/ou une température entre 20 °C et 180 °C, par exemple entre 20 °C et 80 °C, est présente entre le moyen de transport et la buse de filage, et/ou
les filaments de l'étape de procédé a-1) sont mis en contact avec une solution comprenant du calcium, du lactate de calcium et/ou de l'alginate après une sortie d'une buse de filage, dans lequel la solution présente de manière préférée une température entre 0 °C et 80 °C.

6. Procédé selon l'une quelconque ou plusieurs des revendications 4 et 5 précédentes,
**caractérisé en ce que** les filaments sont retirés d'une buse de filage à l'étape de procédé a-1), sont séchés et/ou étirés puis sont stockés, dans lequel un montage sur un rouleau est de manière préférée effectué avant que les filaments ne soient employés à l'étape de procédé b).

7. Procédé selon l'une quelconque ou plusieurs des revendications précédentes,
**caractérisé en ce que** la création de l'ensemble de filaments à l'étape b) comprend en outre :
- le dépôt des filaments au moins du premier type de filament et du deuxième type de filament dans un procédé de pose en appliquant une pression et/ou une température et/ou en employant un liant le long d'un chemin prédéfini pour former la première région prédéfinie et la deuxième région prédéfinie, et/ou
que le façonnage de l'ensemble de filaments à l'étape c) comprend en outre :
- la compression et/ou la découpe des filaments et/ou des faisceaux de fibres.

8. Procédé selon l'une quelconque ou plusieurs des revendications précédentes,
dans lequel l'étape b) comprend en outre :
- la traction des filaments par un ensemble d'une ou de plusieurs grilles pour disposer et regrouper les filaments, ou
dans lequel l'étape b) est en outre mise en œuvre en employant un procédé de pultrusion, dans lequel les filaments sont retirés et/ou transportés, disposés et assemblés entre eux.

9. Procédé selon l'une quelconque ou plusieurs des revendications précédentes,
**caractérisé en ce que** l'assemblage des filaments à l'étape b3) comprend :
- la compression des filaments du premier type de filament entre eux de telle manière que les filaments du premier type de filament sont assemblés entre eux, et
- la compression des filaments du deuxième type de filament entre eux de telle manière que les filaments du deuxième type de filament sont assemblés entre eux, et/ou qu'à l'étape de procédé b3), les filaments sont mis en contact avec un liant comestible, dans lequel les liants comestibles sont choisis dans un groupe comprenant l'alginate, l'albumine, de manière préférée l'albumine d'oeuf, l'albumine de soja et/ou l'albumine de blé, et/ou du gluten de céréales, de manière préférée du gluten de blé et/ou du gluten de seigle, de manière particulièrement préférée une enzyme pour la réticulation de protéines, de manière très particulièrement préférée la transglutaminase.

10. Procédé selon l'une quelconque ou plusieurs des revendications précédentes,
**caractérisé en ce que** les filaments, qui contiennent de l'eau, et en supplément des protéines, forment des filaments de protéines et présentent une teneur en eau supérieure à 26 %, de manière préférée supérieure à 30 %, de manière particulièrement préférée supérieure à 50 %, et/ou
les filaments présentent une surface de section transversale entre 0,04 - 2,5 mm2, de manière particulièrement préférée entre 0,08 - 0,3 mm2, et/ou
dans l'étape de procédé b), entre 10 et 50 000 filaments, de manière préférée entre 5000 et 10 000, sont façonnés en faisceaux et entre 100 et 10 000 faisceaux sont combinés entre eux pour le produit de substitution de viande.

11. Procédé selon l'une quelconque ou plusieurs des revendications précédentes,
dans lequel au moins un des éléments suivants est réglé à l'étape b) :
- la texture du produit de substitution de viande en régulant la densité des filaments,
- la résistance en régulant la densité, le nombre et/ou la taille des filaments,
- l'aspect extérieur, en particulier le marbré et/ou la couleur, en régulant la densité, le nombre et/ou la taille des filaments.

12. Produit de substitution de viande fabriqué et/ou pouvant être fabriqué avec un procédé selon l'une quelconque ou plusieurs des revendications précédentes,
dans lequel le produit de substitution de viande est façonné par un ensemble de filaments avec une multitude de filaments multicomposants, qui présentent une surface de section transversale entre 0,03 et 3 mm2 et comprennent de l'eau, et en supplément des protéines et/ou des graisses,
dans lequel les filaments individuels comprennent une charge et une matière d'enrobage, qui enveloppe la charge, et
dans lequel l'ensemble de filaments comprend :
une première région prédéfinie, qui est mise au point pour former un premier composant d'imitation de viande et qui est formée par des filaments regroupés en faisceaux de la multitude de filaments multicomposants d'un premier type de filament, qui sont associés à une première position dans le produit de substitution de viande,
une deuxième région prédéfinie, qui est mise au point pour former un deuxième composant d'imitation de viande et qui est formée par des filaments regroupés en des faisceaux de la multitude de filaments multicomposants d'un deuxième type de filament, qui sont associés à une deuxième position dans le produit de substitution de viande, dans lequel les filaments sont assemblés entre eux dans l'ensemble de filaments.

13. Produit de substitution de viande selon la revendication 12,
dans lequel les filaments, qui présentent de l'eau et en supplément des protéines, forment des filaments de protéines, qui présentent une teneur en eau supérieure à 26 %, de manière préférée supérieure à 30 %, de manière particulièrement préférée supérieure à 50 %.

14. Produit de substitution de viande selon la revendication précédente, comprenant
**caractérisé en ce que** les filaments comprennent en outre de l'alginate, des substances aromatiques, des substances aromatisantes et/ou des colorants, et
les filaments comprennent des protéines, des graisses, des substances aromatiques, des substances aromatisantes et/ou des colorants en tant que charge, enveloppés d'alginate réticulé en tant que matériau d'enrobage, dans lequel les régions définies présentent des filaments avec différents ingrédients.

15. Produit de substitution de viande selon l'une quelconque ou plusieurs des revendications 12, 13 et/ou 14, **caractérisé en ce que** les filaments sont disposés sensiblement le long d'un axe longitudinal et/ou les composants d'imitation de viande respectifs sont formés à partir de filaments avec différents ingrédients, dans lequel des composants d'imitation de viande sont présents pour une imitation musculaire et une imitation de graisse.
